(19) Europäisches Patentamt
European Patent Office
Office européen des brevets

(11) Veröffentlichungsnummer: **0 044 059**
**B1**

# (12) EUROPÄISCHE PATENTSCHRIFT

(45) Veröffentlichungstag der Patentschrift: **12.03.86**

(21) Anmeldenummer: **81105428.7**

(22) Anmeldetag: **11.07.81**

(51) Int. Cl.[4]: **D 06 P 3/70,** D 06 P 1/41, D 06 F 1/06, D 01 F 6/18 // C09B44/00, C09B69/00, C09B23/16, C09B26/04, C09B57/06

## (54) Verfahren zum Färben von Fasergut aus nassgesponnenen Acrylnitril-Polymerisaten im Gelzustand.

(30) Priorität: **16.07.80 DE 3026948**

(43) Veröffentlichungstag der Anmeldung: **20.01.82 Patentblatt 82/3**

(45) Bekanntmachung des Hinweises auf die Patenterteilung: **12.03.86 Patentblatt 86/11**

(84) Benannte Vertragsstaaten: **DE FR GB IT**

(56) Entgegenhaltungen:
**EP-A-0 014 678**
**EP-A-0 015 232**
**EP-A-0 015 872**
**EP-A-0 029 136**
**DE-A-2 141 987**
**DE-A-2 241 259**
**DE-A-2 459 564**
**DE-A-2 822 912**
**DE-A-2 823 169**
**DE-B-1 269 092**
**FR-A-2 072 020**
**FR-A-2 345 553**
**GB-A-673 738**
**GB-A-1 257 652**
**GB-A-1 568 767**

(73) Patentinhaber: **HOECHST AKTIENGESELLSCHAFT, Postfach 80 03 20, D-6230 Frankfurt am Main 80 (DE)**

(72) Erfinder: **Hähnke, Manfred, Dr., Behringstrasse 13, D-6233 Kelkheim (Taunus) (DE)**
Erfinder: **Mohr, Reinhard, Dr., Rohrstrasse 34, D-6050 Offenbach am Main (DE)**
Erfinder: **Hohmann, Kurt, Am Forsthaus Gravenbruch 55, D-6078 Neu-Isenburg (DE)**

(56) Entgegenhaltungen: (Fortsetzung)
**GB-A-2 017 156**
**GB-A-2 048 963**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft das Färben von nach einer üblichen Nassspinnmethode frisch geformten Fasergut, wie Faserbänder oder Fäden, aus sauer-modifizierten Polymeren oder Mischpolymeren des Acrylnitrils, wobei man im Anschluss an die eigentliche Faserbildungsoperation das ungefärbte Spinngut in dem vorliegenden gequollenen, gelartigen Zustand sowie nach dem weitgehenden Entfernen des nicht-wässrigen Spinnlösemittels, entweder vor oder während oder nach der endgültigen Verstreckung, in einem flüssigen, im wesentlichen wässrigen Färbemedium der Einwirkung einer wässrigen Lösung von mindestens einem solchen Farbstoff, bei welchem der Färbevorgang durch eine Säure-Base-Reaktion zwischen Farbstoff und Faser zustandekommt, vorzugsweise unter schwach sauren Bedingungen bei Temperaturen des Behandlungsbades zwischen 10° und 100°C aussetzt und für die eine Verweilzeit zwischen 1 Sekunde und 10 Minuten darin belässt.

Es sind bereits verschiedene Verfahren zur Herstellung von kontinuierlich gefärbten, nassgesponnenen Acrylfasern im Rahmen des Spinn- und Streckprozesses beschrieben. So werden nassgesponnene Acrylfäden nach dem Waschen, vor oder nach der Verstreckung gefärbt, solange sie sich noch im gequollenen, nicht getrockneten Zustand befinden (FR-A-980 700; JA-A-24 495/69; US-A-3 113 827). Andere Veröffentlichungen (CS-B-104 915; US-A-3 111 357; GB-A-991 957) erläutern die Anfärbung nassgesponnener Acrylfäden während des Streckvorganges, wobei die Farbstoffaufnahme umso grösser ist, je höher die Verstreckung vorgenommen wird. Besonders rasche Anfärbungen von nassgesponnenen Acrylfasern lassen sich erreichen, wenn man den Farbstoff direkt dem Koagulationsbad zusetzt, weil dann der Farbstoff sofort in die sich bildende Faser, deren Struktur noch locker ist, eindringen kann (US-A-3 242 243 und CS-B-95 939). Dieses unmittelbare Ausspinnen von Acrylfasern in ein Färbebad ist in der Technik als «Neochrome-Färbung» bekannt (Man-Made-Textiles, August 1966, Seite 58).

Ein grosses Problem bei einer derartigen kontinuierlichen Gelfärbung ist allerdings die Konstanthaltung der Farbstoffkonzentration während des Färbeprozesses. Durch den Feuchtegehalt der Faserbänder bzw. Fäden wird nämlich ständig Wasser in die Flotte eingeschleppt und somit die Konzentration der Farbstofflösung entsprechend herabgesetzt. Dadurch werden Unegalitäten im Warenbild der solchermassen erzeugten Färbung hervorgerufen.

Eine weitere Schwierigkeit beim Färben von nassgesponnenen Acrylfasern im Gelzustand ist das Erzielen guter Echtheitseigenschaften. Im Falle der Anwesenheit von höheren Anteilen an Lösemitteln bzw. Spinnbadflüssigkeit im Spinngut werden bei Einsatz üblicher basischer Farbstoffe zwar durch Diffusionsprozesse rasche und teilweise tiefe Anfärbungen bewirkt, doch neigen auf diese Weise gefärbte Fasern und Fäden dazu, in nachfolgenden Konfektionierungsprozessen, beispielsweise beim Dämpfen, Waschen, Ausrüsten und auch beim Verstrecken, stark auszubluten.

Dieser Befund bedeutet aber einen Farbstärkeverlust für das zu färbende Polymerisat und darüber hinaus auch einen Farbablauf, wenn zu Beginn einer Färbung noch farbstofffreie Streck-, Wasch- und Avivagebäder mit kationischen oder anionischen Weichmachern vorliegen. Unter den gegebenen Bedingungen haben diese Bäder nämlich die Tendenz, sich während des weiteren Produktionsprozesses mit Farbstoff aufzuladen. Ausserdem ist bei Anwendung der bislang üblichen, stark ausblutenden Farbstoffe eine nicht unerhebliche Maschinenverschmutzung zu beobachten, was besonder stört, sofern die Färbeoperation auf eine andere Nuance umgestellt wird.

Bekannt ist bei allen Färbeverfahren auf der zuvor erwähnten Grundlage die Verwendung von basischen Farbstoffen, welche nur eine einzige quartäre Gruppe oder nur eine einzige aliphatisch gebundene, primäre, sekundäre oder tertiäre Amino-, Guanidino- oder Hydrazinogruppe enthalten.

Aufgabe der vorliegenden Erfindung ist es nunmehr, die aufgezeigten Probleme im Zusammenhang mit der Gelfärbung auszuschalten, die geschilderten Mängel zu beseitigen und die sich gemäss den bisherigen Färbungen ergebenden, aber nicht ausreichenden Fixierungseigenschaften zu verbessern.

Diese Aufgabe wird erfindungsgemäss dadurch gelöst, dass man für die Gelfärbung der eingangs näher definierten Acrylfasern basische Farbstoffe verwendet, die in ihrem Molekül mehr als eine sich gegenüber den sauren Gruppen der Fasersubstanz salzbildend verhaltende Gruppe aufweisen.

Diese für brauchbar erkannten Farbstoffe können beim beanspruchten Verfahren sowohl als Einzelfarbstoffe wie auch für Kombinationsfärbungen eingesetzt werden. Sie zeichnen sich durch eine rasche und starke Fixierung im Polymerisat aus, so dass die mit der herkömmlichen Arbeitsweise verbundenen Nachteile nicht mehr auftreten können. Es entstehen auch innerhalb von kurzen Färbezeiten über den gesamten Faserquerschnitt hinweg gleichmässig durchgefärbte Fäden.

Das Ausmass der Säure-Base-Reaktion zwischen Farbstoff und Faser ist nach Art und Stellung der Gruppen, denen salzbildende Eigenschaften zukommen, sehr verschieden. Unter den zur diesbezüglichen Charakterisierung von für die Durchführung der Erfindung geeigneten basischen Farbstoffen eingeführten Begriff fallen sowohl quartäre Gruppen (Oniumgruppen), welche in Bezug auf den Sitz der kationischen Ladung in einer Seitenkette lokalisiert und/oder innerhalb eines Ringsystems delokalisiert sind, als auch von sich aus ungeladene, aber unter den angewandten Färbebedingungen sich protonisierende, aliphatisch gebundene Gruppen mit stark basischer Funktion. Aromatisch gebundene basische Gruppen sind in die vorstehend erläuterte Sprachregelung nicht miteinbezogen, sie verhalten sich nicht «salzbildend».

Nun wird die Anwendung eines kationischen Monoazo-Farbstoffes mit einer quartären Stickstoffgruppierung zum Färben von Fasermaterial aus Polyacrylnitril-Mischpolymerisaten im Gelzustand zwar schon in der EP-A-15 872 beschrieben. Der hierfür gemäss Beispiel 139 eingesetzte Farbstoff ist aber mono-quartär, verhält sich also in wässriger Lösung bei pH 4,5 gegenüber den sauren Gruppen der Fasersubstanz nur mit «einer» Funktion salzbildend. Die zusätzliche, im Farbstoffmolekül befindliche tertiäre Aminogruppe ist unter den vorliegenden Bedingungen nicht protonisierbar und somit nicht zur Salzbildung befähigt. Die Einbindung dieser tertiären Aminogruppe in ein cyclisches System ändert hieran nichts.

Im Einvernehmen mit dem zuvor dargelegten Sachverhalt konnte durch Vergleichsversuche (siehe Beisp. 22) demonstriert werden, dass beim Einsatz von bis-kationischen Farbstoffen eine erheblich höhere Farbstoff-Fixierung als bei der Verwendung von mono-kationischen Farbstoffen eintritt. Diese Wirkung war nicht ohne weiteres vohersehbar gewesen, nachdem in der GB-A-1 568 767 nur auf die Echtheit von Polyacrylnitril-Färbungen mit bestimmten bis-kationischen Disazo-Farbstoffen hingewiesen ist, nicht aber auf die Überlegenheit dieser Färbungen hinsichtlich der Farbstoff-Fixierung gegenüber solchen, die mit mono-kationischen Farbstoffen erzielt werden.

Ausserdem wird in der GB-A-2 568 767 – ohne irgendeinen Unterschied zu machen – sowohl das Ausziehfärben vorgefertigter Polyacrylnitril-Fasern als auch die Massefärbung solcher gelartiger Polymere erläutert, so dass – mangels besonderer Differenzierung – einer derartigen Empfehlung äquivalente Aussagekraft unabhängig vom Typ der Färbebehandlung eingeräumt werden muss. Im Gegensatz dazu hat sich jedoch erfindungsgemäss herausgestellt, dass in Anbetracht der Färbbarkeit von kationischen Farbstoffen bemerkenswerte Unterschiede im Hinblick auf die Beschaffenheit des Polyacrylnitril-Fasermaterials existieren. Während es an sich bereits lange bekannt ist, kationische Farbstoffe für den genannten Zweck einzusetzen, haben sich jedoch bis-kationische Farbstoffe wegen niedrigen Ziehvermögens und schlechten Farbstoffaufbaus als unbrauchbar für das Färben von vorgefertigen Polyacrylnitril-Fasern erwiesen. Aus diesem Grunde wurden für das Färben von frisch gesponnenen Acrylfasern in Gelform (bevor diese unwiderruflich getrocknet werden) bislang nur jene kationischen Farbstoffe angewandt, welche man auch für das Färben der vorgefertigten Polyacrylnitril-Materialien nach anderen Färbemethoden als geeignet befunden hatte. Erst durch die vorliegende Erfindung wurde erkannt, dass im Falle der Colorierung von nassgesponnenen Acrylfasern im Gelzustand fundamentale Regeln bezüglich Farbstoffangebot beachtet werden müssen, die genau umgekehrt derjenigen zum Färben der fertigen und getrockneten Polymere sind.

Wenn auch in der GB-A-1 568 767 eine Variante der Gelfärbung von im Nassspinnverfahren gewonnenem Spinngut nach dem Neochrome-Prozess gemäss GB-A-673 738 erwähnt ist, bei dem Polyacrylnitril-Fasermaterial mit wässrigen Farbstofflösungen behandelt wird, so darf in diesem Zusammenhang dennoch nicht unbeachtet bleiben, dass für die Herstellung des nassgesponnenen Polymers nach diesem Stand der Technik eine wässrige Spinnlösung benutzt wird, und nicht eine nicht-wässrige Spinnlösung wie entsprechend der vorliegenden Erfindung. Dieser Unterschied ist im Hinblick auf die Nichtvergleichbarkeit der beschriebenen Arbeitsweise mit dem beanspruchten Verfahren deswegen bedeutsam, weil aufgrund der Informationen aus der GB-A-673 738 organische Lösungen des Polymers für die Nassverspinnung des zu färbenden Fasermaterials offensichtlich als unbrauchbar für den Zweck dieser bekannten Gelfärbung betrachtet wurden und daher davon ausgeschlossen werden sollten. Daran ändert auch nichts die Tatsache, dass die GB-A-2 017 156 die Gelfärbung von solchen Arylnitril-Mischpolymerisaten erläutert, welche nach einem Nassspinnprozess mit Hilfe eines nicht-wässrigen Spinnlösemittels erzeugt sind. Das kommt vor allem davon, dass nach diesem letztgenannten Schutzrecht eine bestimmte Lehre, für das beabsichtigte Färben bis-kationische Farbstoffe einzusetzen, nicht entnommen werden kann.

Die aus der DE-A-2 459 564 bekannten basischen Nitrofarbstoffe, deren Eignung für die Gelfärbung von Säuregruppen enthaltenden Polyacrylnitril-Fasern in der genannten Fundstelle ausgesagt wird, können aufgrund ihres besonderen Molekülaufbaus lediglich als monobasische Typen im Sinne der Merkmale der vorliegenden Erfindung aufgefasst werden und lassen sich daher nicht in das für die beanspruchte Färbetechnik charakteristische Schema der mehrfachen Salzbildung mit den sauren Funktionen der Polyacrylnitril-Faser einordnen.

Das als Voraussetzung für das Zustandekommen der erfindungsgemässen färberischen Effekte erkannte Strukturprinzip der Farbstoff-Fixierung in Gestalt salzartiger Bindung der Fasersubstanz von Acrylnitril-Polymeren an mindestens zwei Stellen des Farbstoffmoleküls würde sich im Falle einer in den Veröffentlichungen gemäss EP-A-29 136, EP-A-15 232 und EP-A-14 678 ausschliesslich als unbelegter Vorschlag angedeuteten Gelfärbung wohl auch einstellen, jedoch sind die eigentlichen Verfahrensmassnahmen in Verbindung mit einem solchen Vorhaben diesen Druckschriften nicht unmittelbar und eindeutig entnehmbar. Darüber hinaus handelt es sich bei diesen drei Entgegenhaltungen um ältere europäische Anmeldungen im Sinne von Art. 54 (3, 4) EPÜ, für die eine Beurteilung der erfinderischen Tätigkeit ausser Betracht bleibt.

Die weiter oben erläuterten, für die nach der vorliegenden Erfindung in Erwägung gezogenen Farbstoffe als charakteristisches Merkmal angesehenen Gruppen können von gleicher Natur oder

auch voneinander verschieden sein. Bei derartigen, sich gegenüber den sauren Gruppen der Fasersubstanz salzbildend verhaltenden Gruppen im Molekül der ausgewählten Farbstoffe handelt es sich im einzelnen

– um mehr als eine quatäre Ammoniumgruppe, Dialkylhydrazoniumgruppe mit jeweils 1 bis 4 C-Atomen in den Alkylresten oder Cyclammoniumgruppe,

– eine quartäre Ammoniumgruppe, Dialkylhydrazoniumgruppe mit jeweils 1 bis 4 C-Atomen in den Alkylresten oder Cyclammoniumgruppe und zusätzlich eine oder mehrere aliphatisch gebundene, primäre, sekundäre oder tertiäre Amino-, Guanidino-, Amidino- oder Hydrazinogruppen, oder

– um mehr als eine aliphatisch gebundene, primäre, sekundäre oder tertiäre Amino-, Guanidiono-, Amidino- oder Hydrazinogruppe.

Solche aufgrund der Anwesenheit von quartären Gruppen im Molekül verfahrensgemäss als geeignet gefundene basische Farbstoffe verkörpern Verbindungen von salzartigem Aufbau und bestehen aus Farbstoff-Kation $F^{(+)}$, welches den chromophoren Bestandteil darstellt und das im Vergleich zum Farbstoff-Anion $X^{(-)}$, welches hauptsächlich für die Löslichkeit des Produktes verantwortlich ist, den verhältnismässig grösseren Teil des Moleküls (höheres Kationgewicht) ausmacht.

Als quartäre Gruppen für basische Farbstoffe dieses Typs kommen Ammoniumgruppen in Frage, wie beispielsweise eine Trialkylammoniumgruppe mit niederen Alkylresten, die gegebenenfalls substituiert sein können, des weiteren eine N,N-Dialkyl-N-aryl-ammoniumgruppe mit gegebenenfalls substituierten niederen Alkylresten, eine N,N-Dialkyl-N-aralkyl-ammoniumgruppe mit niederen, gegebenenfalls substituierten Alkylgruppen, sowie eine N-Monoalkyl-N-aryl-N-aralkylammoniumgruppe mit einer niederen, gegebenenfalls substituierten Alkylgruppe; diese Ammoniumgruppen sind entweder direkt oder über einen gegebenenfalls Heteroatome und/oder kleine organische Gruppierungen als Brückenglied aufweisenden aliphatischen Rest an den aromatischen Teil des chromophoren Systems gebunden, wie beispielsweise an einen Benzol- oder Naphthalinkern; sofern in diesen Ammoniumgruppen mehrere Substituenten aus der gleichen Kategorie am selben Stickstoffatom vorhanden sind, dann können diese sowohl identisch als auch unterschiedlich voneinander sein.

Quartäre Gruppen der erfindungsgemäss verwendbaren Farbstoffe sind weiterhin niedere Dialkylhydrazoniumgruppen und Cyclammonium-Reste, vorzugsweise aromatischen Charakters, insbesondere mesomere 5- oder 6-gliedrige, positiv geladene Ringe, die noch weitere Heteroatome, wie Sauerstoff-, Schwefel- und/oder Stickstoffatome enthalten können.

Diese Cyclammoniumreste können Bestandteil des chromophoren Systems sein oder an einen aromatischen carbocyclischen Rest, wie einen Benzolkern oder Naphthalinkern, direkt gebunden oder an diesen ankondensiert sein. Cyclammonium-Reste und deren Derivate sind beispielsweise Pyridinium-, Pyrazolium-, Imidazolium-, Triazolium-, Tetrazolium-, Oxazolium-, Thiazolium-, Isothiazolium-, Oxdiazolium-, Thiadiazolium-, Isothiadiazolium-, Chinolinium-, Indolium-, Indazolium-, Benzimidazolium-, Benztriazolium-, Benzisothiazolium-, Benzthiazolium-, Arylguanazolium- oder Benzoxazolium-Reste, wobei diese Reste in den Heterocyclen bevorzugt durch niedere, gegebenenfalls substituierte Alkylreste, durch Aralkyl-, Aryl- und/oder Cycloalkyl-Reste substituiert sein können und in den aromatischen carbocyclischen Teilen durch quartäre, wie beispielsweise die oben erwähnten, durch andere basische und/oder nicht-ionogene Gruppen substituiert sein können;

solche basische Gruppen (ohne quartäre Ladung) sind beispielsweise primäre, sekundäre oder tertiäre Aminogruppen, Hydrazino-, Guanidino- oder Amidinogruppen, des weiteren heterocyclische, stickstoffhaltige Ringe, wie beispielsweise der Pyridin-, Imidazol-, Morpholin-, Piperidin- oder Piperazin-Ring,

und nicht-ionogene Gruppen sind beispielsweise Halogenatome, wie Chlor- oder Bromatome, niedere, gegebenenfalls substituierte Alkylgruppen, niedere Alkoxygruppen, die Nitrogruppe, die Sulfamoyl- oder Carbamoylgruppe, eine durch niederes Alkyl, Phenyl und/oder Benzyl substituierte Sulfamoyl- oder Carbamoylgruppe, niedere Carbalkoxy-, niedere Alkylsulfon- und niedere Alkanolyaminogruppe, die Benzoylaminogruppe, die Trifluormethyl- und Cyangruppe.

Im Vorstehenden wie im folgenden bedeuten:

Die Angabe «nieder», dass der durch diese Spezifizierung näher charakterisierte Alkyl-, Alkylen- oder Alkoxyrest aus 1–4 C-Atomen besteht;

die Angabe «substituierter Alkylrest», dass das Alkyl durch einen oder zwei, bevorzugt einen Substituenten aus der Gruppe Hydroxy, Acetyloxy, niederes Alkoxy, Cyan, niederes Carbalkoxy, wie Carbomethoxy und Carboäthoxy, Chlor, Phenyl und Carbamoyl substituiert ist, wobei darüber hinaus das Phenyl selbst noch durch Halogen, wie Chlor, Brom oder Fluor, niederes Alkyl, niederes Alkoxy, Nitro, Acetylamino, Sulfamoyl und/oder Carbamoyl substituiert sein kann und das Carbamoyl seinerseits noch durch niederes Alkyl, eine Phenylgruppe oder einen Benzylrest mono- oder disubstituiert sein kann; ein in diesem Sinne substituierter Alkylrest ist somit beispielsweise eine β-Hydroxyäthyl-, β-Cyanäthyl-, β-Acetoxyäthyl-, γ-Hydroxypropyl-, β-Methoxyäthyl-, Benzyl- oder Phenäthylgruppe;

die Angabe «Aryl» einen Arylrest, insbesondere einen Phenyl- oder Naphthylrest, der noch durch die oben angegebenen quartären, basischen oder nicht-ionogenen Gruppen substituiert sein kann; nicht-ionogene Substituenten, von denen bevorzugt 1 bis 3 in dem Arylrest enthalten sein können, sind insbesondere Halogen, wie Chlor oder Brom, niederes Alkyl, wie Methyl oder Äthyl, niederes Alkoxy, wie Methoxy, Äthoxy oder Propoxy, Nitro, niederes Alkylsulfon und Trifluormethyl;

die Angabe «Aralkyl» einen niederen Alkylrest,

der durch einen Arylrest substituiert ist, wobei der Arylrest die obengenannte Bedeutung hat; bevorzugt ist der Arylrest im «Aralkyl» ein Phenylrest, der durch 1 oder 2 Substituenten aus der Gruppe niederes Alkyl, niederes Alkoxy und Chlor substituiert sein kann;

die Angabe «Cycloalkyl» einen Cycloalkylrest von 4–12 Ring-C-Atomen, wie der Cyclopentyl- oder Cyclohexylrest, der noch durch 1–3 niedere Alkylgruppen, wie Methylgruppen, substituiert sein kann.

Niedere Alkylgruppen (Alkylreste) sind insbesondere die Methyl- und Äthylgruppe, niedere Alkoxygruppen insbesondere die Methoxy- und Äthoxygruppe, Aralkylreste sind insbesondere die Benzyl- und Phenäthylgruppe.

Als quartäre Ammoniumgruppen sind bevorzugt die Trimethylammoniumgruppe, die Triäthylammoniumgruppe, die Dimethyl-äthyl-ammoniumgruppe, die Benzyl-dimethyl-ammoniumgruppe und die Phenyl-dimethyl-ammoniumgruppe zu nennen.

Niedere, substituierte Alkylreste, die mit dem Alkyl an ein Stickstoffatom gebunden sind, sind bevorzugt Alkylgruppen von 1–4 C-Atomen, die durch eine Hydroxy-, niedere Alkoxy-, Cyan- oder Phenylgruppe substituiert sind, wie beispielsweise die β-Hydroxyäthyl-, β-Cyanäthyl-, β-Methoxyäthyl-, die Benzyl- oder Phenäthylgruppe.

Die gemäss der vorliegenden Erfindung verwendbaren basischen Farbstoffe von quartärer Natur enthalten als Anion $X^{(-)}$ vorzugsweise das Anion einer starken anorganischen oder organischen Säure, wie der Schwefelsäure oder deren (niederes Alkyl)-Halbester (= niederes Alkosulfat), der Salzsäure, der Phosphorsäure, der Perchlorsäure, der Tetrafluoroborsäure, Rhodanwasserstoffsäure, Essigsäure, Chloressigsäure, Trichloressigsäure, Ameisensäure, Oxalsäure, Milchsäure, Propionsäure oder Malonsäure. Ferner können die Farbstoffe als Chloride in Form ihrer Doppelsalze mit Zinkchlorid vorliegen. Die Art des Anions ist für die coloristischen Eigenschaften der erfindungsgemäss verwendeten Farbstoffe ohne Belang, soweit es sich um farblose Anionen handelt. Bei geringem gewichtsmässigen Anteil des Anions werden Färbungen mit besonders hoher Farbstärke erzielt. Ausserdem soll das Anion so ausgesucht werden, dass das entstehende Farbstoffsalz wasserlöslich ist.

Insbesondere bedeutet $X^{(-)}$ das Äquivalent des Sulfat-, Phosphat-, Oxalat- oder Tetrachlorozinkat-Anions; oder das Chlorid-, Bromid-, Tetrafluoroborat-, Rhodanid-, Acetat-, Monochloracetat-, Trichloracetat-, Trichlorozinkat-Anion oder das Alkosulfat-Anion mit einer niederen Alkylgruppe, wie das Methosulfat- oder Äthosulfat-Anion.

Von den erfindungsgemäss verwendbaren Farbstoffen sind solche quartäre Farbstoffe hervorzuheben, deren kationische Ladung delokalisiert ist, was durch verschiedene mesomere Grenzstrukturen formelmässig ausgedrückt werden kann.

Insbesondere vorteilhaft gestaltet sich das beanspruchte Verfahren auch mit erfindungsgemäss verwendbaren Farbstoffen, die neben der oder den quartären Gruppen noch eine oder mehrere andere, stark basische Gruppen besitzen. Solche stark basische Gruppen (ohne quartäre Ladung) sind beispielsweise primäre, sekundäre oder tertiäre Aminogruppen, die über einen gegebenenfalls Heteroatome und/oder kleine organische Gruppierungen als Brückenglied aufweisenden aliphatischen Rest an den Farbstoffchromophor gebunden sind, weiterhin Hydrazino-, Guanidino- oder Amidinogruppen; die Aminogruppen können auch Teil eines heterocyclischen Ringes sein, so beispielsweise des Pyridin-, Imidazol-, Morpholin-, Piperidin- oder Piperazinringes.

Sekundäre Aminogruppen sind bevorzugt niedere Monoalkylaminogruppen, Aryl- oder Aralkylaminogruppen, wie beispielsweise die Methylamino-, Äthylamino- oder iso-Propylaminogruppe oder die Phenylamino- oder p-Methyl-phenylamino-Gruppe. Tertiäre Aminogruppen sind beispielsweise die Dimethylamino-, Diäthylamino-, N-Methyl-anilino-, N-Äthyl-anilino- oder N-Methylbenzylamino-Gruppe.

Heteroatome und kleinere organische Gruppierungen, die eben und weiter zuvor als Brückenglied erwähnt wurden und über welche die Amino- oder Ammoniumgruppen mittels aliphatischer Reste an einen aromatischen Ring des Farbstoffmoleküls gebunden sein können, sind beispielsweise Gruppen der Formeln –O–, –NH–, -N(niederes Alkyl)-, –CO– oder $-SO_2-$;

die aliphatischen Ketten ihrerseits sind z.B. $-CH_2-$, $-CH_2CH_2-$, $-CH_2-CH_2-CH_2-$ oder $-CH_2-CH(OH)-CH_2-$;

und Kombinationen davon miteinander sowie untereinander, wie besondere auch solche, die aus den Beispielen ersichtlich sind.

Farbstoffe, die selbst keine quartäre Gruppe, wohl aber mehr als eine stark basische Gruppe (ohne quartäre Ladung) vom vorstehend erläuterten Typ enthalten, über ein aliphatisches Zwischenglied (wie oben) an den Farbstoffchromophor gebunden, lassen sich ebenfalls beim neuen Färbeverfahren einsetzen.

Die erfindungsgemäss eingesetzten, stark und schnell in dem Polymer fixierenden basischen Farbstoffe können den verschiedensten Farbstoffklassen angehören, so insbesondere der Klasse der Monoazofarbstoffe, der Disazofarbstoffe, der Methin-, Azamethin- und Diazamethin-Farbstoffe und der Naphthalactam-Farbstoffe.

Von den erfindungsgemäss verwendbaren basischen Monoazofarbstoffen sind insbesondere Farbstoffe der allgemeinen Formel (1)

$$[D^{(+)}-N=N-K] \quad X^{(-)} \qquad (1)$$

oder 2 $X^{(-)}$, falls K eine quartäre Gruppe enthält, zu nennen, in welcher

$D^{(+)}$ den Rest einer aromatischen carbo- oder heterocyclischen Diazokomponente bedeutet, die eine der obengenannten quartären Gruppen besitzt, wobei $D^{(+)}$ insbesondere einen Pyrazolium-, Triazolium-, Thiazolium-, Thiadiazolium-, Indazolium-, Benztriazolium-, Benzimidazolium-, Benzthiazolium- oder Benzisothiazolium-Rest darstellt und diese Cyclammoniumgruppen sowie der gegebenenfalls daran ankondensierte aromatische carbocyclische Rest, wie anfangs beschrieben, substituiert sein können, oder $D^{(+)}$ ein aromatischer carbo- oder heterocyclischer Rest ist mit einer direkt an ihn gebundenen oder, wie beispielsweise oben erwähnt, mit einer über ein Brückenglied an ihn gebundenen, substituierten Ammoniumgruppe, wie insbesondere Trialkylammonium*, oder Dialkylhydrazoniumgruppe, wobei diese aromatischen Reste insbesondere Reste des Benzols, Naphthalins und Benzthiazols sind;

K den Rest einer aromatischen carbo- oder heterocyclischen Kupplungskomponente darstellt, insbesondere aus der Benzol-, Naphthalin- oder Indolreihe, bevorzugt aus der N,N-Dialkyl-aminobenzol- und N,N-Dialkyl-aminonaphthalin-, der N-Alkyl-N-aralkyl-aminobenzol- und -naphthalin-, der N,N-Bis-(aralkyl)-aminobenzol- und -naphthalin-, der N-Alkyl-N-arylaminobenzol- und der N-Alkylindol-Reihe, wobei die aromatischen carbocyclischen Reste der Kupplungskomponente K bevorzugt durch 1, 2 oder 3 Substituenten aus der Gruppe niederes Alkanoylamino, Benzoylamino, niederes Alkyl, niederes Alkoxy, Nitro, Hydroxy, Amino, niederes Alkylamino, niederes Dialkylamino, Chlor und Trifluormethyl substituiert sein können. Dieser Rest der Kupplungskomponente K weist seinerseits mindestens eine ungeladene basische, an einen aromatischen Kern direkt oder über ein Brückenglied (wie beispielsweise oben erwähnt), aliphatisch gebundene primäre, sekundäre oder tertiäre Aminogruppe, oder eine quartäre Ammoniumgruppe auf, die gegebenenfalls Bestandteil eines 5- oder 6-gliedrigen, aromatischen heterocyclischen Ringes (z.B. Cyclammoniumrestes), eines Amidins, Guanidins, Hydrazins oder eines Thiuroniumrestes sein können; bevorzugt gebunden sind diese basischen Radikale über den Alkylrest einer niederen N-Alkylaminogruppe (Brückenglied) als Substituent am aromatischen Kern von K, während gegebenenfalls eine dort vorhandene zweite niedere N-Alkylaminogruppe im Alkylrest durch Chlor, Hydroxy, niederes Alkoxy, Aryloxy, Cyan, Acylamino, wie niederes Alkanolyamino oder Benzoylamino, oder durch niederes Carbalkoxy substituiert sein kann;

und $X^{(-)}$ als Äquivalent eines Anions die weiter oben angegebene Bedeutung hat.

Von den erfindungsgemäss verwendbaren basischen Monoazofarbstoffen sind bevorzugt auch diejenigen der allgemeinen Formeln (2a), (2b) und (2c)

$$\left[ D^{(+)}\text{–N=N–Ar–}\underset{\displaystyle R}{\underset{|}{\text{N}}}\text{–B–}Q_1^{(+)} \quad (\text{oder } -Q_2) \right] \begin{array}{l} 2\ X^{(-)} \\ \text{oder } X^{(-)} \end{array} \qquad (2a)$$

$$\left[ D^{(+)}\text{–N=N–Ar–O–B–}Q_1^{(+)} \quad (\text{oder } -Q_2) \right] \begin{array}{l} 2\ X^{(-)} \\ \text{oder } X^{(-)} \end{array} \qquad (2b)$$

$$\left[ D_1\text{–N=N–Ar–N}\begin{array}{l} \diagup \text{B–}Q_1^{(+)} \\ \diagdown \text{B–}Q_1^{(+)} \end{array} \right] 2\ X^{(-)} \qquad (2c)$$

zu nennen, in welchen die einzelnen Formelreste folgendermassen definiert sind:

$D^{(+)}$ wie oben angegeben;

$D_1$ ist der Rest einer aromatischen carbo- oder heterocyclischen Diazokomponente, insbesondere aus der Benzol- oder Naphthalinreihe, der die obengenannten basischen (ohne quartäre Ladung) und/oder nicht-ionogenen Substituenten enthalten kann, wobei $D_1$ bevorzugt der Phenyl- oder Naphthalinrest ist, der durch 1–3 Substituenten aus der Gruppe niederes Alkyl, niederes Alkoxy, Fluor, Chlor, Brom, niederes Alkanoylamino, Benzoylamino, Nitro, Cyan, niederes Alkylsulfon, Phenylsulfon, Trifluormethyl, Carbamoyl, Sulfamoyl, durch niederes Alkyl, Phenyl und/oder Benzyl substituiertes Carbamoyl oder Sulfamoyl, und niederes Carbalkoxy substituiert sein kann;

Ar ist ein p-Phenylen- oder 1,4-Naphthylen-Rest, der durch 1 oder 2 Substituenten aus der Gruppe niederes Alkyl, wie Methyl oder Äthyl, niederes Alkoxy, wie Methoxy oder Äthoxy, Halogen, wie Chlor oder Brom, Nitro, niederes Alkanoylamino, wie Acetylamino, und Trifluormethyl substituiert sein kann;

R ist ein Wasserstoffatom oder ein niederer, gegebenenfalls substituierter Alkylrest, ein Aralkyl- oder Cycloalkylrest;

B stellt ein zweiwertiges aliphatisches Brückenglied dar, insbesondere einen Alkylenrest von 1–6 C-Atomen, bevorzugt von 2–4 C-Atomen, hauptsächlich den Äthylen- oder Propylenrest, oder einen niederen Alkenylenrest, wie den Vinylenrest, wobei ein solches Alkylenbrückenglied B seinerseits substituiert oder über kleinere organische Gruppierungen, wie –CO–, –O–CO–, Phenoxy oder $-SO_2-$, an das Stickstoffatom der Arylaminogruppe oder an $Q_1^{(+)}$ bzw. $Q_2$ gebunden sein kann;

$Q_1^{(+)}$ ist eine quartäre Ammoniumgruppe, insbesondere eine niedere Trialkylammonium-, niedere N,N-Dialkyl-N-aryl- bzw. -N-aralkylammonium-, niedere Dialkyl-hydrazonium-Gruppe oder ein Cyclammoniumrest, insbesondere von diesem ein Pyridinium- oder Imidazolium-Rest obiger Bedeutung, wobei die Alkylreste am Stickstoffatom gegebenenfalls substituiert sind;

$Q_2$ steht für eine ungeladene basische primäre, sekundäre oder tertiäre Aminogruppe, die Bestandteil eines 5- oder 6-gliedrigen, aromatischen heterocyclischen Ringes sein können, oder eine Amidino-, Guanidino- oder Hydrazinogruppe, vorzugsweise Dialkylaminogruppen, welche im Alkylrest substituiert sein können;

und $X^{(-)}$ hat die obengenannte Bedeutung.

Von den erfindungsgemäss verwendbaren basischen Disazofarbstoffen sind insbesondere die der allgemeinen Formeln (3a) und (3b)

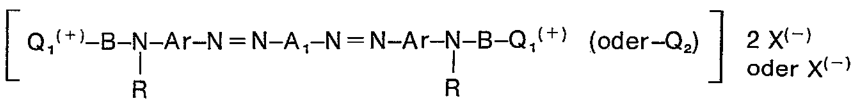 (3a)

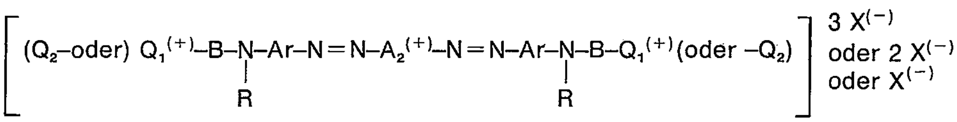 (3b)

zu nennen, in welchen Ar, B, R, $Q_1^{(+)}$, $Q_2$ und $X^{(-)}$ die oben genannten Bedeutungen haben, wobei die in den Formeln (3a) und (3b) jeweils zweifach auftretenden Formelreste jeweils gleich oder verschieden voneinander sein können;

$A_1$ den Rest einer aromatischen carbocyclischen oder aromatischen heterocyclischen Tetrazokomponente bedeutet, insbesondere aber den Phenylenrest, den Naphthylenrest oder den Diphenylenrest oder einen der Reste der Formeln

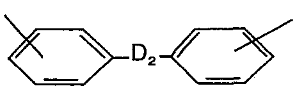

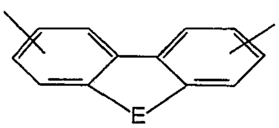

wobei die aromatischen Kerne in den zuvor herausgestellten Gliedern sowie in diesen beiden Formeln durch Substituenten, vorzugsweise 1 oder 2 Substituenten, aus der Gruppe niederes Alkyl, wie Methyl, niederes Alkoxy, wie Methoxy, und Chlor substituiert sein können;

$A_2^{(+)}$ den Rest einer aromatischen carbocyclischen oder aromatischen heterocyclischen Tetrazokomponente mit mindestens einer quartären Gruppierung der obengenannten Art darstellt, die insbesondere Bestandteil eines 5- oder 6-gliedrigen heterocyclischen Ringes ist und wobei die heterocyclischen und/oder carbocyclischen Teile gegebenenfalls substituiert sind;

$D_2$ ein aliphatisches oder aromatisches carbocyclisches oder aromatisches heterocyclisches oder aus einfachen Atomgruppierungen bestehendes Brückenglied ist, beispielsweise eines der Formeln $-CH_2-$, $-CH_2CH_2-$, $-O-CH_2-CH_2-O-$, $-CH=CH-$, $-NH-$, $-O-$, $-S-$, $-SO_2-$, $-N=N-$, $-NH-CO-NH-$, $-CO-NH-$, $-NH-CO-$, der Rest der Formel

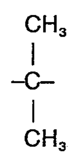

oder ein Cyclohexylenrest, oder ein heterocyclischer Rest, beispielsweise der Formeln

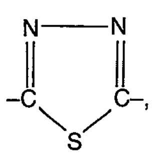 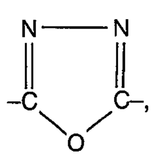 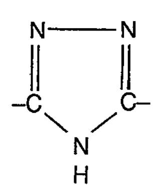 oder 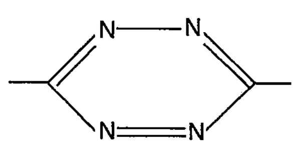 ,

vorzugsweise jedoch ein Brückenglied der Formel $-CH_2-$, $-CH_2-CH_2-$, $-CH=CH-$, $-NH-$, $-SO_2-$, $-CO-NH-$ oder $-CH-CO-$ ist; und worin

E für ein zweiwertiges Brückenglied der Formel $-O-$, $-S-$, $-NH-$ oder $-SO_2-$ steht.

In den zuvor erläuterten Disazofarbstoffen gemäss den allgemeinen Formeln (3a) und (3b) können die Formelreste $Q_1^{(+)}$ sowie $Q_2$ – beide zusammen oder jeder einzeln für sich allein – auch direkt oder lediglich über das Brückenglied B an den jeweils zugehörigen Arylenrest Ar gebunden sein, wobei dann jedoch als Auswahlregel gilt, dass ein in Formel (3a) gegebenenfalls vorhandener Rest $Q_2$ nicht unmittelbar mit Ar verbunden sein kann und dass entsprechend Formel (3b) im Falle von zwei beiderseitig an die Ar direkt gebundenen Resten $Q_2$ der Rest der Tetrazokomponente $A_2^{(+)}$ mehr als eine quartäre Gruppierung der obengenannten Art aufweisen muss.

Von den erfindungsgemäss verwendbaren basischen Disazofarbstoffen sind weiterhin insbesondere die der allgemeinen Formeln (4a) und (4b)

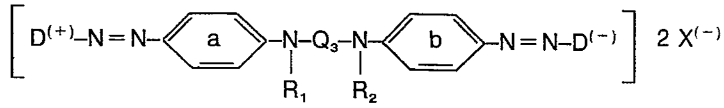

(4a)

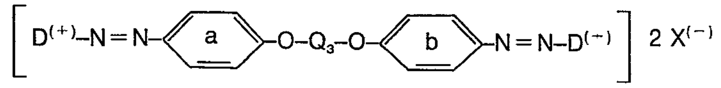

(4b)

zu nennen, in welchen $D^{(+)}$ gleich oder verschieden sind und jedes die oben genannte Bedeutung hat;

$Q_3$ eine niedere Alkylengruppe, wie beispielsweise eine Äthylen- oder Propylengruppe, eine niedere Alkylen-oxy-alkylen-Gruppe, wie beispielsweise eine Äthylen-oxy-äthylengruppe, oder eine niedere Alkylen-amino-alkylen-Gruppe, wie eine Diäthylenamino-Gruppe, bedeutet oder eine Alkylengruppe von 2 bis 8 C-Atomen ist, die durch zwei Aminogruppen oder Sauerstoffatome unterbrochen ist, wie eine Dioxy-triäthylen-Gruppe, oder eine niedere Alkylengruppe ist, die gegebenenfalls substituiert ist oder durch einen aromatischen carbocyclischen Rest, wie einen Benzolkern oder Naphthalinkern, beispielsweise durch den m- oder p-Xylylenrest, durch –O–CO–, -N(Alkyl) oder -N(Phenyl)- unterbrochen sein kann, oder eine niedere Alkenylengruppe ist;

$R_1$ und $R_2$ gleich oder verschieden sind und jedes ein Wasserstoffatom oder eine niedere, gegebenenfalls substituierte Alkylgruppe darstellt, oder $R_1$ und $R_2$ zusammen mit den beiden Stickstoffatomen und dem Rest $Q_3$ einen heterocyclischen Ring bilden, wie beispielsweise einen Piperazinring;

die Benzolkerne a und b jeweils durch einen oder zwei Substituenten aus der Gruppe niederes Alkyl, niederes Alkoxy, Halogen, Trifluormethyl und niederes Alkanoylamino gleich oder verschieden substituiert sein können, oder die Kerne a oder b oder beide jeweils mit einem ankondensierten Benzolkern einen Naphthylenrest bilden;

und $X^{(-)}$ die obengenannte Bedeutung hat.

Von den erfindungsgemäss verwendbaren basischen Methinfarbstoffen sind insbesondere die der allgemeinen Formel (5)

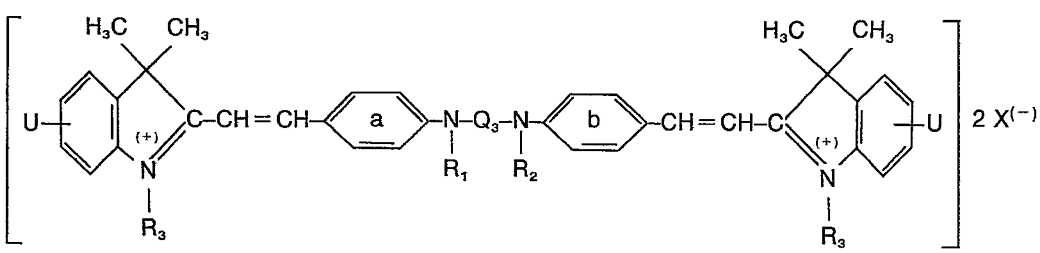

(5)

hervorzuheben, in welcher $R_1$, $R_2$, $Q_3$, $X^{(-)}$ sowie die Benzolkerne a und b die oben genannten Bedeutungen haben;

$R_3$ einen niederen, gegebenenfalls substituierten Alkylrest oder einen Aralkylrest, z. B. den Benzyl- oder Phenäthylrest, bedeutet; und

U beide gleich oder verschieden sind und jedes für ein Wasserstoffatom, ein Halogenatom, wie ein Chlor- oder Bromatom, eine niedere Alkylgruppe, wie Methyl- oder Äthylgruppe, eine niedere Alkoxygruppe, wie Methoxy- oder Äthoxygruppe, eine Nitrogruppe, eine Aryloxygruppe, wie eine Phenoxygruppe, eine Aralkoxygruppe, wie eine Benzyloxy- oder Phenäthoxygruppe, oder eine niedere Carbalkoxygruppe, wie eine Carbomethoxy- oder Carbäthoxygruppe, steht.

Als erfindungsgemäss verwendbare basische Farbstoffe sind insbesondere Azamethinfarbstoffe der Formel (6)

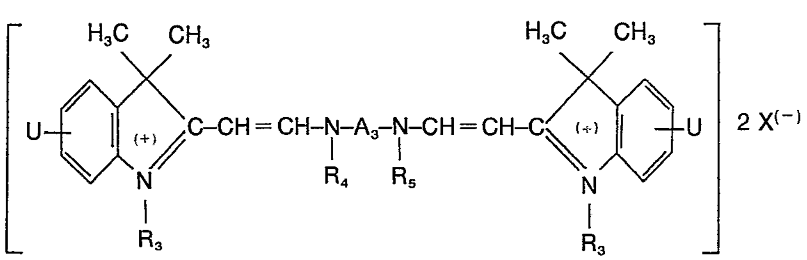

(6)

und Diazamethinfarbstoffe der Formel (7)

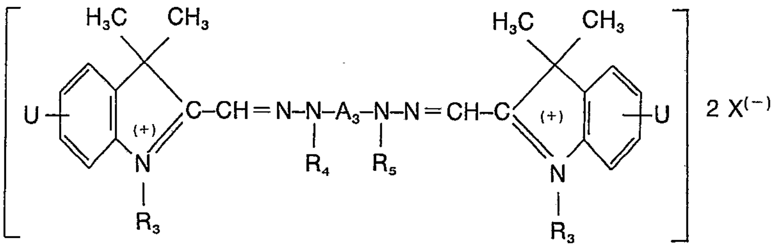

(7)

hervorzuheben, in welchen $R_3$, U und $X^{(-)}$ die oben genannten Bedeutungen haben;

$R_4$ und $R_5$ gleich oder verschieden sind und jedes ein Wasserstoffatom oder eine niedere, gegebenenfalls substituierte Alkylgruppe ist;

und $A_3$ einen bivalenten Rest bedeutet, der aus einem oder mehreren aromatischen carbo- oder heterocyclischen Kernen besteht, die noch durch nicht-aromatische Brückenglieder miteinander verbunden sein können.

Der bivalente Rest $A_3$ ist beispielsweise der bivalente Rest des Benzols, Naphthalins, Diphenyls, des Glykoldiphenyläthers, des Diglykoldiphenyläthers, eines niederen Diphenylalkans, der Diphenyläthers, des Diphenylsulfids, des Diphenylsulfons, des Diphenylketons, des Azobenzols und des Diphenylharnstoffs, wobei die Benzolkerne in diesen Resten jeweils noch durch 1 oder 2 Substituenten, bevorzugt aus der Gruppe niederes Alkyl, niederes Alkoxy, Halogen, wie Brom und insbesondere Chlor, Carbamoyl und Sulfamoyl substituiert sein können, oder $A_3$ ist beispielsweise der bivalente Rest des 2-Phenylbenzimidazols, des 2-Phenylbenzthiazols, des 2-Phenylbenzoxazols oder des Diphenyl-oxadiazols, wobei der heterocyclische Ring noch durch niedere Alkylgruppen substituiert sein kann, oder $A_3$ ist der bivalente Rest der Formel

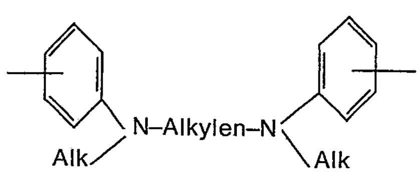

in welcher Alk die Bedeutung eines niederen Alkylrestes hat und Alkylen für ein geradkettiges oder verzweigtes Alkylen-Brückenglied steht.

Besonders vorteilhaft gestaltet sich das erfindungsgemässe Verfahren unter der Verwendung von bis-quartären Farbstoffen,

insbesondere von bis-quartären Disazo-Farbstoffen der allgemeinen Formel (4a), in welcher $D^{(+)}$ gleich oder verschieden sind und jedes einen weiter oben erwähnten Triazolium-, Benzthiazolium- oder Thiazolium-Rest darstellt, $Q_3$ eine Alkylengruppe von 2 bis 4 C-Atomen ist, $R_1$ und $R_2$ gleich oder verschieden sind und jedes für eine niedere, gegebenenfalls substituierte Alkylgruppe, vorzugsweise ein Wasserstoffatom steht und die Benzolkerne a und b sowie $X^{(-)}$ die obengenannten Bedeutungen aufweisen,

des weiteren von bis-quartären Methin-, Azamethin- und Diazamethin-Farbstoffen der allgemeinen Formeln (5), (6) und (7), in welchen $Q_3$, $R_1$, $R_2$, a und b sowie $X^{(-)}$ die eben zuvor genannten Bedeutungen haben und $A_3$, $R_3$, $R_4$, $R_5$ und U die für die Formeln (5), (6) und (7) angegebenen Bedeutungen besitzen.

Das Verfahren nach der vorliegenden Erfindung lässt sich ebenfalls durchführen unter Einsatz von Methinverbindungen der allgemeinen Formel (8)

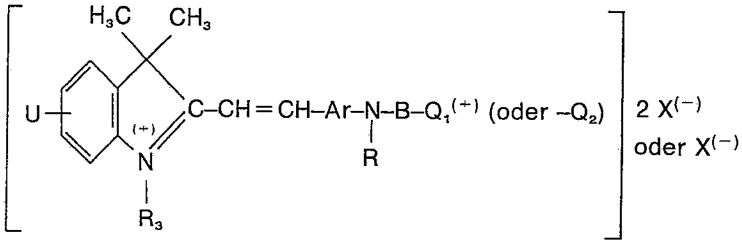

(8)

worin Ar, B, R, $R_3$, $Q_1^{(-)}$, $Q_2$, U und $X^{(-)}$ die oben genannten Bedeutungen zukommen.

Weiterhin sind als erfindungsgemäss verwendbare Farbstoffe insbesondere Azamethin- und Diazamethin-Verbindungen der allgemeinen Formel (9)

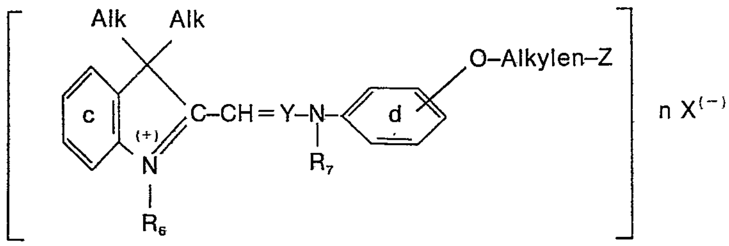

(9)

zu nennen. In der Formel (9) bedeuten:

$R_6$ ist eine Alkylgruppe von 1 bis 4 C-Atomen, die substituiert sein kann, beispielsweise durch eine Carbamoylgruppe ($-CONH_2$), eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;

Alk ist eine Alkylgruppe von 1 bis 4 C-Atomen, wobei beide gleich oder verschieden voneinander sein können;

Y ist der Methinrest (CH) oder ein Stickstoffatom;

$R_7$ ist ein Wasserstoffatom oder eine Alkylgruppe von 1 bis 4 C-Atomen, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;

Alkylen ist eine geradkettige oder verzweigte Alkylengruppe von 2 bis 6 C-Atomen;

Z ist eine Gruppe der Formel (9a) oder (9b)

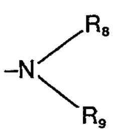

(9a)

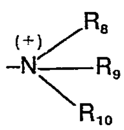

(9b)

in welchen

$R_8$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyangruppe oder Phenylgruppe,

$R_9$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe, oder der Phenylrest ist, der durch 1 oder 2 Substituenten aus der Gruppe Chlor, Alkyl von 1 bis 4 C-Atomen, Alkoxy von 1 bis 4 C-Atomen, Nitro, Carbalkoxy mit 1 bis 4 C-Atomen im Alkylrest und Carbamoyl substituiert sein kann, und

$R_{10}$ ein Wasserstoffatom oder eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe, oder in welchen

$R_8$ und $R_9$ zusammen mit dem Stickstoffatom einen 5-, 6- oder 7-gliedrigen heterocyclischen Rest bilden, der noch als weiteres Heteroatom ein Stickstoff-, Sauerstoff- oder Schwefelatom enthalten kann, wie beispielsweise der Piperidin-, Piperazin-, Morpholin-, Pyridin- oder Pyrimidinring, oder

$R_8$ und $R_9$ oder $R_8$, $R_9$ und $R_{10}$ zusammen mit dem positiv geladenen Stickstoffatom einen 5-, 6- oder 7-gliedrigen heterocyclischen Rest bilden, der noch als weiteres Heteroatom ein Stickstoff-, Sauerstoff- oder Schwefelatom enthalten kann, wie beispielsweise den Piperidinium-, Morpholinium-, Piperazinium-, 4-N-Methyl-piperazinium- oder Pyridiniumrest, wobei $R_{10}$ entweder Teil des heterocyclischen Restes oder ein Wasserstoffatom oder die genannte Alkylgruppe sein kann;

der Benzolkern c kann durch 1 oder 2, vorzugsweise einen, Substituenten aus der Gruppe Halogen, wie Chlor und Brom, Nitro, Cyan, Sulfamoyl, Alkyl von 1 bis 4 C-Atomen, Alkoxy von 1 bis 4 C-Atomen und Carbalkoxy mit 1 bis 4 C-Atomen im Alkylrest substituiert sein;

der Benzolkern d kann durch 1 oder 2, vorzugsweise einen, Substituenten aus der Gruppe Halogen, wie Chlor, Nitro, Alkyl von 1 bis 4 C-Atomen, Alkoxy von 1 bis 4 C-Atomen und Carbalkoxy mit 1 bis 4 C-Atomen im Alkylrest substituiert sein;

n ist die Zahl 1 oder 2; und

$X^{(-)}$ ist das Äquivalent eines farblosen Anions entsprechend der weiter oben genannten Bedeutung.

Die Formelreste $R_6$, $R_7$, $R_8$, $R_9$, $R_{10}$ und Alk, ebenso die Substituenten von c und d können zueinander gleiche oder voneinander verschiedene Bedeutungen haben. Bevorzugt hat $R_{10}$ die gleiche Bedeutung wie $R_7$.

Die oben erwähnten Alkylgruppen sind vorzugsweise Methyl- und Äthylgruppen, die Alkoxygruppen vorzugsweise Methoxy- und Äthoxygruppen; Carbalkoxygruppen sind vorzugsweise Carbomethoxy- und Carbäthoxygruppen, Alkanoyloxygruppen vorzugsweise die Acetyloxygruppe.

Schliesslich sollen an dieser Stelle noch solche bis-quartäre Farbstoffe erwähnt werden, welche neben einer Azamethin- bzw. Diazamethin-Funktion in ihrem Molekül auch eine Azogruppierung aufweisen, welche für die Durchführung des beanspruchten Verfahrens gleichfalls als brauchbar befunden worden sind.

Als weitere für das beanspruchte Verfahren in Betracht zu ziehende Farbstoffe sind insbesondere solche aus der Klasse der Naphthalactam-Verbindungen entsprechend den allgemeinen Formeln (10) und (11)

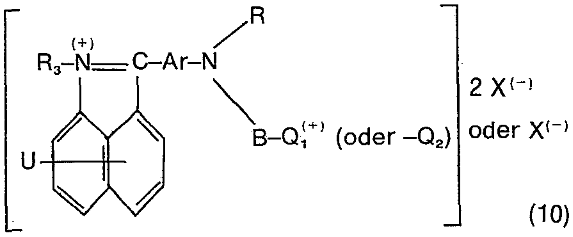

(10)

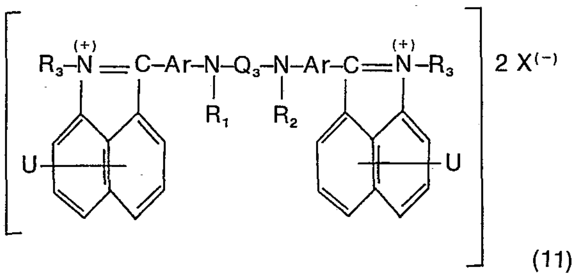

(11)

hervorzuheben, worin Ar, B, $Q_1^{(+)}$, $Q_2$, $Q_3$, R, $R_1$, $R_2$, $R_3$, U und $X^{(-)}$ mit den weiter oben genannten Bedeutungen für diese Substituenten übereinstimmen.

Schliesslich sind von den erfindungsgemäss verwendbaren Farbstoffen solche zu nennen, die auf Verbindungen der allgemeinen Formeln (12) und (13)

$$[(Q_2\text{– oder) } Q_1^{(+)}\text{–B–}Y_1\text{–B–}Q_1^{(+)}\text{ (oder –}Q_2)]\ m\ X^{(-)} \qquad (12)$$

und

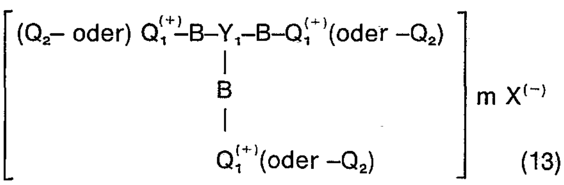

(13)

zurückgehen, in denen $Y_1$ den Rest eines Farbstoffchromophors darstellt, wie beispielsweise eines gegebenenfalls durch Chlor oder Phenyl substituierten Kupferphthalocyanins, eines Anthrachinon-Abkömmlings, eines Nitrofarbstoffes oder eines Farbstoffes auf Basis einer Triphenylmethanverbindung; die anderen Substituenten B, $Q_1^{(+)}$, $Q_2$ und $X^{(-)}$ die weiter oben genannten Bedeutungen besitzen und m für 0, 1, 2 oder 3 steht.

Beim Gegenstand der vorliegenden Erfindung handelt es sich um ein Verfahren zum Färben von Fasergut, wie Faserbänder oder Fäden, aus sauer-modifizierten Acrylnitrilpolymerisaten im Gelzustand, die nach einem üblichen Nassspinnverfahren hergestellt worden sind. Hierbei hat man die unverstreckten, teilverstreckten oder verstreckten Fasern oder Fäden – deren Hydratationszustand (Wassergehalt) zwischen 5 und 150% vom Gewicht des Polymers liegt, vorzugsweise zwischen 30 und 120% – von dem zur Herstellung der Spinnlösung verwendeten Lösungsmittel durch Auswaschen in Wasser fast völlig befreit. Die vom Spinnprozess her mitgeschleppte Lösungsmittelmenge soll nach erfolgter Vorbehandlung maximal 5% nicht überschreiten, was bedeutet, dass der Restgehalt an Lösungsmittel in dem für die Färbung vorgesehenen Polymer zwischen 0 und 5% (vom Gewicht) liegt. Anschliessend wird das so vorbereitete Fasergut ohne getrocknet zu sein bei Temperaturen zwischen 10° und 100 °C, vorzugsweise zwischen 20° und 90 °C, bei einem pH-Wert zwischen 2 und 7, vorzugsweise zwischen 4 und 5,5, also im schwach sauren Bereich mit den in Wasser gelösten Farbstoffen behandelt. Die Färbezeit beträgt zwischen 1 Sekunde und 10 Minuten; im allgemeinen wird zwischen 1 und 60 Sekunden, vorzugsweise zwischen 3 und 20 Sekunden gefärbt. Die angeführte Färbedauer entspricht den Verweilzeiten der Fasern in der Färbeflotte, durch die das Spinngut nach dem Austreten aus der Düse und dem dann erfolgenden Koagulieren und Auswaschen läuft. Hierbei kann der Kontakt zwischen dem Acrylnitrilpolymerisat und der Färbeflotte nach allen praxisüblichen Verfahrensweisen, beispielsweise in einem Tauchtrog wie einem Foulard stattfinden. Damit eine optimale Ausnutzung der Färbeflotte möglich ist, führt man vorteilhafterweise die Färbeflotte im Gegenstrom oder im Querstrom zur Fortbewegungsrichtung der Fasern.

Nach der vorliegenden Erfindung verbindet sich im Verlauf der Färbung je ein Äquivalent der sauren Gruppen in der Fasersubstanz mit einer entsprechenden Menge von sich gegenüber dieser Gruppe basisch verhaltenden Gruppen des Farbstoffes unter Ausbildung einer salzartigen Bindung.

Das Verstrecken der Fasern zur Orientierung der Makromoleküle wird verfahrensgemäss vor, bei dem Färbevorgang selbst oder unmittelbar danach vorgenommen. Ausserdem kann man nach erfolgter Färbung die Fasern zusätzlich mit anionischen oder kationischen Weichmachern avivieren. Auch ist es möglich, eine Behandlung mit Dampf oder Heissluft anzuschliessen.

Für die Durchführung des beanspruchten Verfahrens werden ausser pH-regulierenden Verbindungen weitere Chemikalien im allgemeinen nicht benötigt, können aber für besondere Zwecke mitverwendet werden.

Da Elektrolyte bei vielen praxisüblichen Acrylnitril-Gel-Färbungen stören, ist es vorteilhaft, wenn die erfindungsgemäss verwendeten Farbstoffe elektrolytfrei zur Anwendung kommen, d.h., dass sie besonders vorteilhaft ohne grössere Mengen Stellmittel bzw. in Form von Flüssigeinstellungen eingesetzt werden.

Die Konzentration des Farbstoffes im Färbebad hängt sowohl vom verwendeten Farbstoff als auch von der Nuance und Tiefe der gewünschten Färbung ab und kann von einer sehr niedrigen Konzentration bis zu einer gesättigten Farbstofflösung reichen.

Die Färbeoperation selbst kann verfahrensgemäss kontinuierlich oder diskontinuierlich bewerkstelligt werden. Während des Färbens wird bei kontinuierlich durchlaufendem Fasermaterial die Konzentration des Färbebades ständig auf dem gewünschten Wert gehalten, indem man auf geeignete Weise eine Lösung des Farbstoffes in einer derartigen Konzentration zugibt, dass der durch die Faserbänder aufgenommene Farbstoff fortlaufend ersetzt wird. Die so gefärbten Faserbänder bzw. Fäden werden anschliessend unter praxisüblichen Bedingungen mit Dampf oder Heissluft fixiert, verstreckt, aviviert und gegebenenfalls unter Zulassung von Schrumpf getrocknet, gekräuselt und in Kartons abgelegt. Die erzielten Echtheiten, wie Licht-, Wasser-, Schweiss-, Trocken- und Nassreibechtheiten und Überfärbeechtheiten sind in allen Fällen einwandfrei.

Neben den Homopolymeren des Acrylnitrils kommen für den Einsatz nach dem beanspruchten Verfahren als zu verspinnende Substrate Mischpolymere mit Hauptanteil an Acrylnitril und geringerem Anteil an einem anderen Monomer oder Monomeren, insbesondere anderen Vinylverbindungen, wie z.B. Vinylidencyanid, Vinylchlorid, Vinylfluorid, Vinylacetat, Vinylpropionat, Vinylpyridin, Vinylimidazol, Vinylpyrrolidon, Vinyläthanol, Acryl- oder Methacrylsäure, Acryl- oder Methacrylsäureester, Acryl- oder Methacrylsäureamide in Betracht, wobei diese Mischpolymerisate mindestens 50 Gew.-%, vorzugsweise mindestens 85 Gew.-% Acrylnitril-Einheiten aufweisen. Die verwendeten Homopolymerisate von Acrylnitril oder dessen Mischpolymerisate sind sauer modifiziert; sie enthalten mindestens eine saure Funktion, wie z.B. Sulfo- oder Sulfatogruppen, welche mittels eines Katalysators jeweils in das Ende der Polymerisatketten eingeführt, oder als saure Gruppen enthaltende Comonomere, wie z.B. Acrylsäure, Itaconsäure, Vinylsulfonsäure, Styrolsulfonsäure, Allylsulfonsäure, Methallylsulfonsäure, Vinyloxyarensulfonsäure, Allyloxyarensulfonsäure, Methallyloxyarensulfonsäure, Acryloxyalkoxyarensulfonsäure sowie deren Alkalisalze, einpolymerisiert wurden.

Es sind erfindungsgemäss also alle Acrylnitrilpolymerisate geeignet, welche zur Bindung der verwendeten basischen Farbstoffe befähigende saure Gruppen enthalten. Solche sauren Gruppen sind in dem Spinngut in Mengen zwischen 10 und 150 Milliäquivalent pro kg Polymerisat, vorzugsweise zwischen 20 und 80 Milliäquivalent pro kg Polymerisat vorhanden.

Die beschriebenen Acrylnitrilpolymerisate können aus allen praxisüblichen Lösungsmitteln versponnen werden, worauf sich die Färbung mit den erfindungsgemässen Farbstoffen anschliesst. Genannt seien hier als solche anorganische Spinnlösungsmittel z.B. Calciumchlorid-, Zinkchlorid- oder Natriumthiocyanat-Lösungen.

Ausserdem kommt als Lösungsmittel für das Verspinnen des Acrylnitrilpolymers auch Salpetersäure in Frage.

Weitere für den Spinnprozess geeignete Lösungsmittel auf organischer Basis sind Dimethylformamid, Dimethylacetamid, Äthylencarbonat, β-Butyrolacton, Tetramethylensulfon, Dimethylsulfoxyd etc.

Bei der im vorliegenden Fall durchgeführten Nassspinnverfahrensweise wird das gelöste Polymerisat in ein Koagulationsbad, welches neben dem zum Lösen des Polymers verwendeten Lösungsmittel noch etwa 30 bis 70 Gew.-%, vorzugsweise 40 bis 60 Gew.-% Wasser enthält, eingesponnen; nach dem Koagulationsbad können die so ersponnenen Fäden ein Streckbad, welches noch etwa 30 bis 85 Gew.-%, vorzugsweise 40 bis 85 Gew.-% Wasser enthält, durchlaufen; anschliessend folgt z.B. ein Waschbad, das noch zu über 70 Gew.-%, vorzugsweise zu über 80 Gew.-%, oder ganz aus Wasser besteht. Wie bereits weiter oben erwähnt, können die Massnahmen zur Verstreckung beim beanspruchten Verfahren auch während der Färbeoperation oder im Anschluss daran erfolgen.

Die nachstehenden Beispiele dienen zur Erläuterung der Erfindung. Die darin angegebenen Teile und Prozentangaben sind Gewichtsteile und Gewichtsprozente, sofern nichts anderes vermerkt ist. Volumenteile verhalten sich zu Gewichtsteilen wie Liter zu Kilogramm.

Beispiel 1:

Ein Acrylnitril-Mischpolymerisat aus 94% Acrylnitril, 5% Acrylsäuremethylester und 1% Na-Methallylsulfonat wird in Form einer 28%igen Spinnlösung in Dimethylformamid nach Standardbedingungen bei 80°C unter Einsatz einer 100-Loch-Spinndüse mit einem Lochdurchmesser von 80 µm nass versponnen, wobei man ein Koagulationsbad von 50°C verwendet, welches aus 50% Dimethylformamid und 50% Wasser besteht. Daraufhin wird das Spinngut durch Nachwaschen mit Wasser von 90–95°C vom Dimethylformamid befreit.

Das erhaltene Fadenmaterial wird sodann ohne vorherige Trocknung in einer Menge von 10 g (Trockengewicht), entsprechend 20 g Feuchtgewicht, für 60 s unter guter Flottenbewegung in eine mittels Essigsäure auf pH 4,5 gestellte Lösung von 0,01 g eines bis-quartären Farbstoffes der Formel

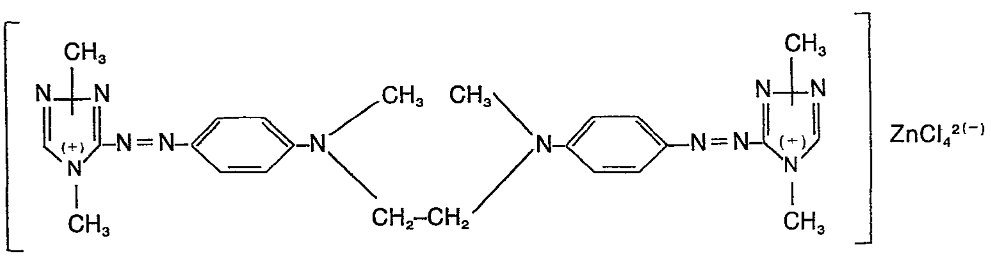

in 250 ml Wasser von Raumtemperatur gebracht. Nach Ablauf der angegebenen Verweilzeit des Spinngutes in der Färbeflotte beobachtet man eine praktisch vollständige Baderschöpfung. Die so behandelten Fäden werden anschliessend in einem Streckbad von 80 °C aus 70% Wasser und 30% Dimethylformamid im Verhältnis 1:1,5 verstreckt. Nach kurzem Spülen in kaltem Wasser wird die gefärbte Ware wie üblich getrocknet.

Man erhält eine blaustichig rote Färbung mit ausgezeichneten Echtheiten, hauptsächlich besonders guten Nassechtheiten und sehr guten Lichtechtheiten.

Beispiel 2:

Verwendet man bei der im Beispiel 1 aufgeführten Färbung eine Lösung von 0,05 g des dort genannten Farbstoffes in 100 ml Wasser und hält eine Färbedauer von 10 s ein, so erzielt man ebenfalls eine farbstarke Färbung des Fadenmaterials mit ausgezeichneten Echtheiten.

Verkürzt man nunmehr die Färbedauer noch weiter bis auf 3 s, so erhält man wohl eine etwas hellere Färbung aber mit gleichfalls ausgezeichneten Echtheiten und mit völliger Durchfärbung des Fadenmaterials über den gesamten Faserquerschnitt.

Beispiel 3:

Führt man das Fadenmaterial des Beispiels 1 kontinuierlich (als Endlosfäden) durch das gemäss Beispiel 2 verwendete Färbebad, wobei eine Verweilzeit der Fäden in der Färbeflotte von 3 s eingestellt wird und wobei ein Luftgang des laufenden Fadens von 2 min bei Raumtemperatur nachgeschaltet, die so gefärbte Ware gespült und aviviert und anschliessend getrocknet wird, so erhält man ein gleich gutes Färberesultat wie in Beispiel 2. Die Spül- und Avivagebäder werden hierbei durch den eingesetzten Farbstoff nicht merklich angeblutet.

Bei Einhaltung einer Verweilzeit von 2 s und sonst gleichen Bedingungen wird eine etwas hellere, von 10 s eine dunklere Färbung erzielt.

Beispiel 4:

Schliesst man bei dem im Beispiel 1 beschriebenen Färbeverfahren nach dem Spülgang des gefärbten Fadenmaterials eine Behandlung desselben während 30 s in einer Lösung von 0,5 g eines Weichmachers der Formel

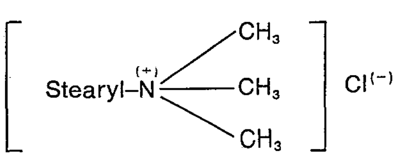

in 100 ml Wasser von Raumtemperatur an, so führt diese Avivage zu keinem Ausbluten des Farbstoffes in das angewendete Avivagebad.

Beispiel 5:

Verwendet man das Polymer des Beispiels 1, verspinnt dieses jedoch hier unter Einsatz von Dimethylacetamid als Lösungsmittel in einem praxisüblichem Nassspinnverfahren, so lässt sich mit dem in dieser Weise gewonnenen Spinngut die im Beispiel 1 beschriebene Färbung mit dem gleich guten Resultat durchführen. Die Farbstoff-Fixierung verläuft genauso rasch und vollständig.

Beispiel 6:

Verwendet man das Polymer des Beispiels 1, verspinnt dieses jedoch hier unter Einsatz von Äthylencarbonat als Lösungsmittel in einem praxisüblichen Nassspinnverfahren, so lässt sich mit dem in dieser Weise gewonnenen Spinngut die im Beispiel 1 beschriebene Färbung mit dem gleich guten Resultat durchführen. Die Farbstoff-Fixierung verläuft rasch und vollständig.

Beispiel 7:

Verwendet man das Polymer des Beispiels 1, verspinnt dieses jedoch hier unter Einsatz von Dimethylsulfoxyd als Lösungsmittel in einem praxisüblichen Nassspinnverfahren, so lässt sich mit dem in dieser Weise gewonnenen Spinngut die im Beispiel 1 beschriebene Färbung mit gleich gutem Resultat durchführen. Die Farbstoff-Fixierung verläuft rasch und vollständig.

Beispiel 8:

Verwendet man das Polymer des Beispiels 1, verspinnt dieses jedoch hier unter Einsatz einer 48%igen wässrigen Na-Rhodanid-Lösung als Lösungsnittel in einem praxisüblichen Nassspinnverfahren, so lässt sich mit dem in dieser Weise gewonnenen Spinngut die im Beispiel 1 beschriebene Färbung mit gleich gutem Resultat durchführen. Die Farbstoff-Fixierung verläuft rasch und vollständig.

Beispiel 9:

Verwendet man das Polymer des Beispiels 1, verspinnt dieses jedoch hier unter Einsatz von konzentrierter Salpetersäure als Lösungsmittel in einem praxisüblichen Nassspinnverfahren, so lässt sich mit dem in dieser Weise gewonnenen Spinngut die im Beispiel 1 beschriebene Färbung mit gleichem Resultat durchführen.

Beispiele 10 bis 16:

Ersetzt man nunmehr das im Beispiel 1 verwendete Polymer durch andere Polymere mit der folgenden Zusammensetzung, so erhält man mit dem in dieser Weise gewonnenen Spinngut entsprechend der Färbevorschrift des Beispiels 1 ebenfalls eine sehr rasche und feste Farbstoff-Fixierung:

| Beispiel | Polymer aus |
|---|---|
| 10 | 94 % Acrylnitril<br>4 % Acrylsäuremethylester<br>2 % Na-Methallylsulfonat |
| 11 | 95 % Acrylnitril<br>4,5% Acrylsäuremethylester<br>0,5% Acrylsäure |

(Fortsetzung)

| Beispiel | Polymer aus |
|---|---|
| 12 | 85 % Acrylnitril<br>13 % Vinylchlorid<br>2 % Na-Allylsulfonat |
| 13 | 85 % Acrylnitril<br>14,5% Vinylacetat<br>0,5% Na-Vinylsulfonat |
| 14 | 59 % Acrylnitril<br>40 % Vinylidenchlorid<br>1 % Na-Methallylsulfonat |
| 15 | 94 % Acrylnitril<br>5 % Acrylsäuremethylester<br>1 % Styrol-4-sulfonsäure-Na |
| 16 | 94 % Acrylnitril<br>4 % Vinylacetat<br>1 % Na-Methallylsulfonat<br>1 % Itaconsäure-Na |

Beispiel 17:

Verwendet man anstelle der gemäss Beispiel 1 erzeugten Fäden hier solche Fäden, denen beim Spinnprozess 0,2 Teile eines handelsüblichen Titandioxyd-Mattierungsmittels (bezogen auf das Polymer) zugesetzt worden sind, so erhält man beim Färben des Spinngutes entsprechend der Arbeitsweise des Beispiels 1 ebenfalls eine gute Farbstoff-Fixierung und sehr gute Echtheiten.

Beispiele 18 und 19:

Arbeitet man beim Färben des Spinngutes anstelle der Angaben des Beispiels 1 bei einer Färbetemperatur von 60 °C bzw. 90 °C, aber sonst unter identischen Bedingungen, so erhält man eine noch etwas tiefere Anfärbung der Fäden bei gleich guten Echtheitseigenschaften.

Beispiel 20:

Verwendet man anstelle des im Beispiel 1 eingesetzten Fadenmaterials ein Fadenmaterial von identischer polymerer Zusammensetzung, welches bei gleichem Trockengewicht (= 10 g), jedoch ein Feuchtgewicht von 25 g aufweist (d. h. ein hoch hydratisiertes Material), so erhält man ebenfalls eine sehr gute Farbstoff-Fixierung auf dem Spinngut, wenn man zum Färben nach den Angaben des Beispiels 1 arbeitet.

Beispiel 21:

Reduziert man bei dem gemäss Beispiel 1 erzeugten Fadenmaterial durch partielles Trocknen des Spinngutes bei Raumtemperatur das Feuchtgewicht desselben auf 15 g, so erhält man beim Färben unter den dortigen Bedingungen ebenfalls eine hohe Farbstoff-Fixierung.

Beispiel 22:

Verwendet man zum Färben anstelle des im Beispiel 1 eingesetzten Farbstoffes hier einen konventionellen mono-quartären Farbstoff der Formel

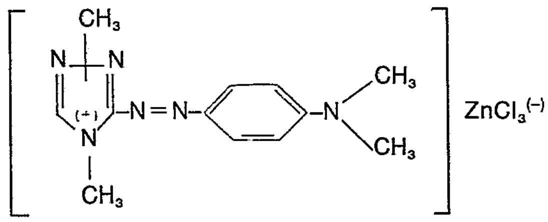

so erhält man auf dem Spinngut entsprechend der Arbeitsweise des Beispiels 1 nur eine sehr unvollständige Farbstoff-Fixierung, d. h., es bleibt ein grosser Teil des Farbstoffes in der Färbeflotte zurück. Durch eine Verlängerung der Verweilzeit lässt sich in diesem Fall keine Erhöhung der Farbstoff-Fixierung erzielen.

Im Gegensatz hierzu ergibt die Färbung des gleichen Fadenmaterials mit dem bis-quartären Farbstoff des Beispiels 1 eine sehr weitgehende Erschöpfung der Färbeflotte bereits nach Ablauf der normal üblichen Färbezeit.

Beispiele 23 und 24:

Setzt man zum Färben des Spinnguts mit dem bis-quartären Farbstoff von Beispiel 1 anstelle der dort verwendeten Farbstoffmenge von 0,01 g hier Mengen von 0,03 g bzw. 0,001 g des identischen Farbstoffes ein, so erhält man nach der Arbeitsweise gemäss Beispiel 1 bei der im vorliegenden Färbetest entsprechend erhöhten oder verringerten Farbtiefe eine gleichermassen rasche und feste Farbstoff-Fixierung. Die Echtheiten der Färbungen sind ebenfalls sehr gut.

Beispiele 25 und 26:

Wird im Zuge der Arbeitsweise des Beispiels 1 das frisch gesponnene Fadenmaterial nach dem Koagulieren derart gewaschen, dass noch ein Restgehalt an dem als Spinn-Lösungsmittel verwendeten Dimethylformamid von 2% bzw. 5% in dem zum Färben eingesetzten Spinngut verbleibt, so ergibt sich bei der Färbeoperation nach der dortigen Vorschrift ebenfalls eine sehr hohe Farbstoff-Fixierung.

Beispiele 27 und 28:

Führt man die Färbung des Beispiels 1 anstelle bei pH 4,5 hier bei pH-Werten von 3 bzw. 6, aber sonst denselben Arbeitsbedingungen durch, so erhält man das gleiche Färbeergebnis wie im Beispiel 1.

Beispiel 29:

Arbeitet man bei der Nassverspinnung des Polymers gemäss den Angaben des Beispiels 1, verstreckt aber das gewonnene Fadenmaterial vor dem eigentlichen Färbeprozess in praxisüblicher Weise im Verhältnis von 1:1,5, d. h. um 50%, so ergibt sich beim Färben nach Vorschrift von Beispiel 1 ebenfalls eine sehr gute Farbstoff-Fixierung.

Beispiel 30:

Arbeitet man zum Färben gemäss den Angaben des Beispiels 2, jedoch unter Führung des Fadenmaterials in Gegenrichtung zum Strom der Färbeflotte, wobei ein rohrförmiges Färbebad verwendet wird, so erreicht man eine vollständige Erschöpfung des Färbebades, d.h., durch die sehr gute Farbstoff-Fixierung tritt nach Ablauf der Verweilzeit ein von Farbstoff restlos befreites Restfärbebad aus.

Beispiel 31:

Führt man die in Beispiel 3 beschriebene Färbung unter gleichzeitiger Verstreckung des Fadenmaterials im Verhältnis von 1:3 durch, so erhält man ein gleich gutes Färbeergebnis wie in Beispiel 3.

Beispiel 32:

Verwendet man bei der Arbeitsweise des Beispiels 1 zum Färben des Spinngutes hier eine Mischung von Farbstoffen in den unten angegebenen Mengen:

0,005 g Farbstoff der Formel

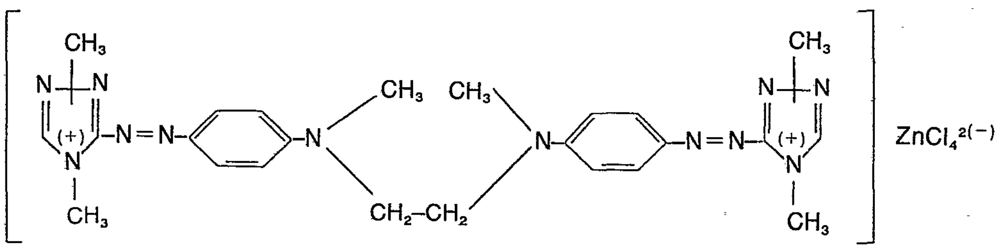

0,003 g Farbstoff der Formel

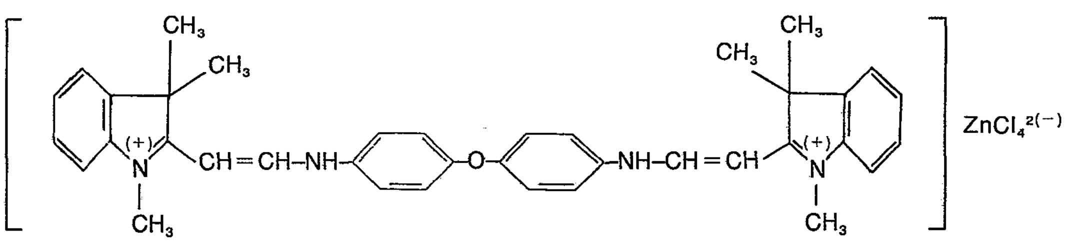

0,002 g Farbstoff der Formel

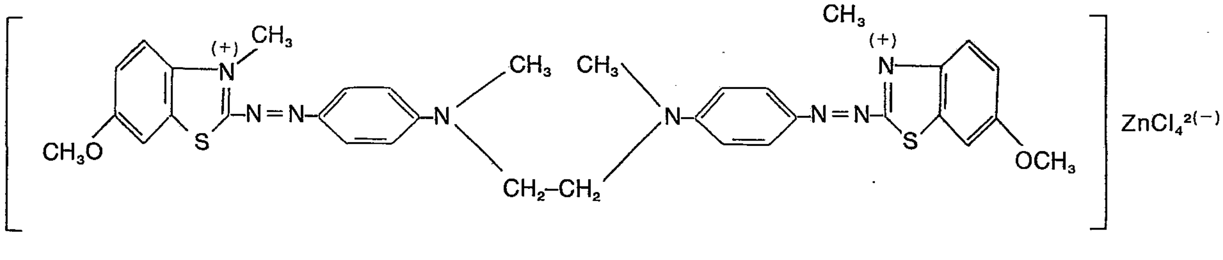

so erhält man eine farbtiefe braune Färbung mit sehr hohen Echtheiten, besonders mit sehr hoher Lichtechtheit, Waschechtheit und alkalischer Schweissechtheit.

Beispiel 33:

Wird bei der Arbeitsweise des Beispiels 1 nach der eigentlichen Färbung des Fadenmaterials noch ein Dämpfprozess desselben während 30 min bei ca. 102 °C bzw. 10 min bei 115 °C angeschlossen, so erhält man ebenfalls ein sehr gutes Färberesultat.

Tabellenbeispiele:

Werden zum Färben des Spinnguts anstelle des im Beispiel 1 verwendeten Farbstoffes hier andere Farbstoffe der folgenden Formeln eingesetzt, so erhält man unter Einhaltung von sonst identischen Bedingungen ebenfalls eine sehr gute Farbstoff-Fixierung, d.h. eine gute Baderschöpfung und ein sehr hohes Echtheitsniveau:

| Beispiel | Formel | Nuance |
|---|---|---|
| 34 | 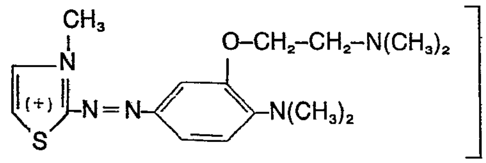 $Cl^{(-)}$ | rotstichig blau |
| 35 | 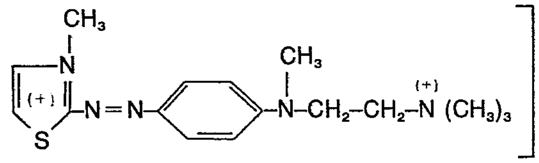 $2\ Cl^{(-)}$ | blaustichig violett |
| 36 | 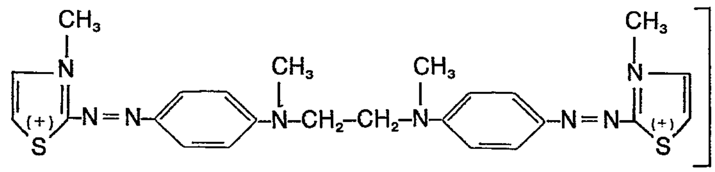 $2\ BF_4^{(-)}$ | blaustichig violett |
| 37 | 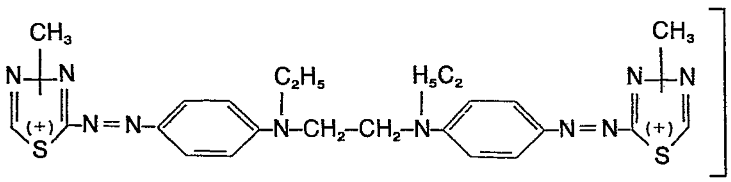 $ZnCl_4^{2(-)}$ | violett |
| 38 | 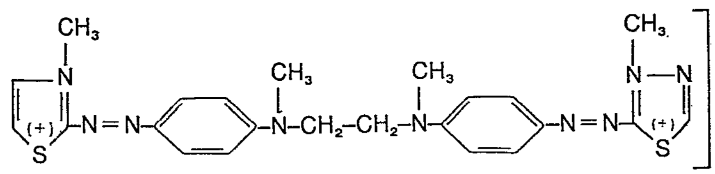 $2\ BF_4^{(-)}$ | rotstichig violett |
| 39 | 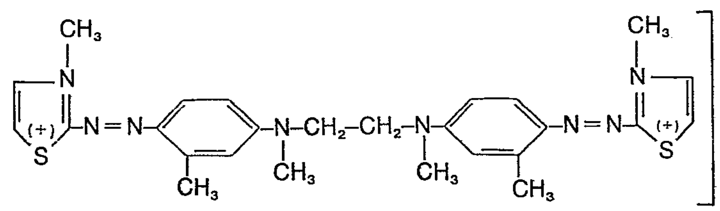 $2\,CH_3SO_4^{(-)}$ | violett |
| 40 | 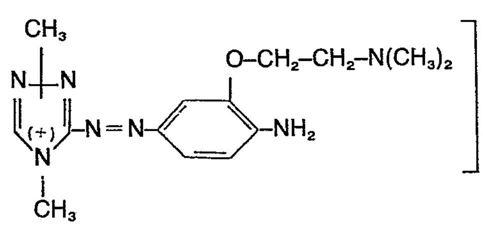 $BF_4^{(-)}$ | blaustichig rot |
| 41 | 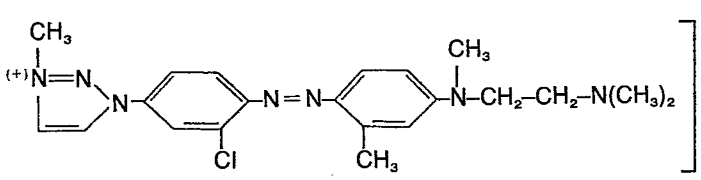 $CH_3SO_4^{(-)}$ | gelbstichig rot |

| Beispiel | Formel | | Nuance |
|---|---|---|---|
| 42 | 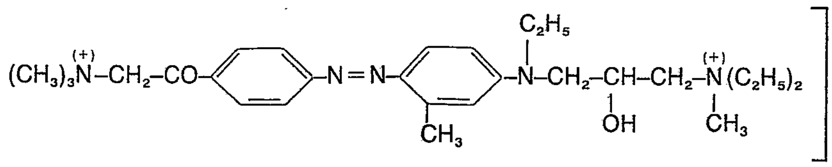 | 2 $BF_4^{(-)}$ | rot |
| 43 | 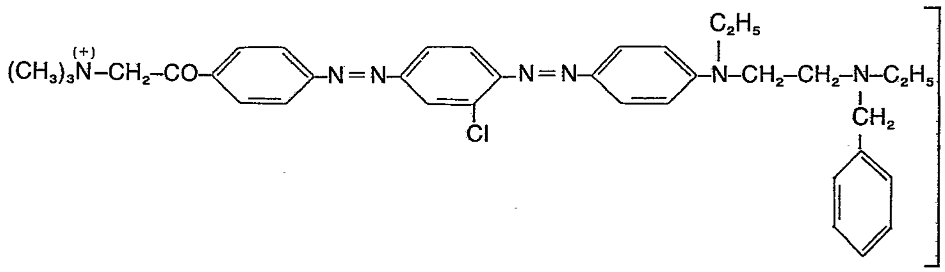 | $Cl^{(-)}$ | orange |
| 44 | 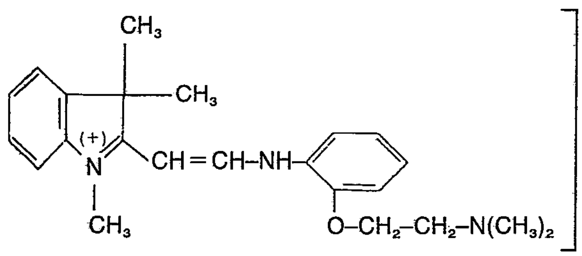 | $BF_4^{(-)}$ | gelb |
| 45 | 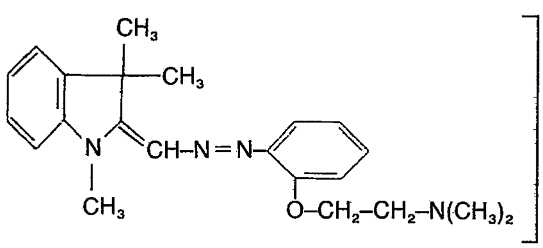 | $CH_3COOH$ | rotstichig gelb |
| 46 | 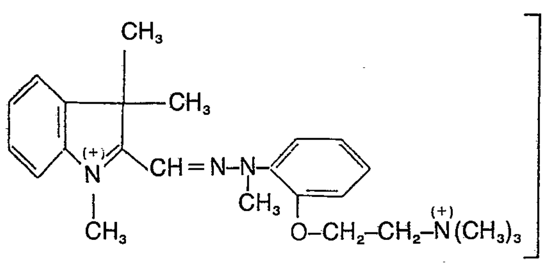 | 2 $BF_4^{(-)}$ | rotstichig gelb |
| 47 | 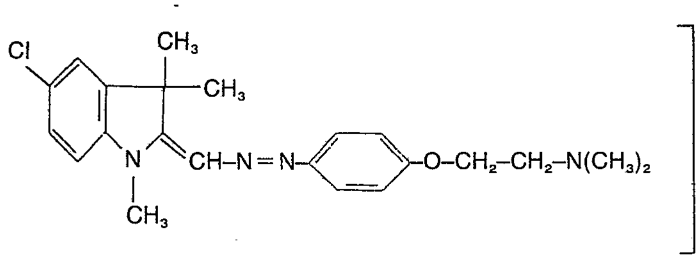 | HCl | rotstichig gelb |

| Beispiel | Formel | Nuance |
|---|---|---|
| 48 | 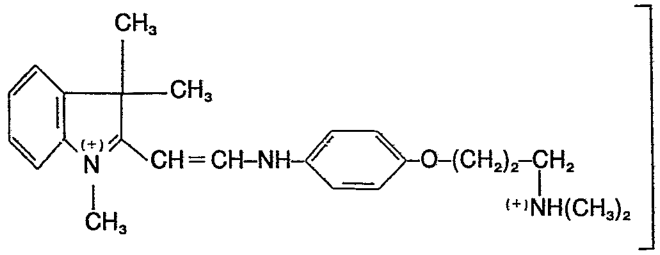 $ZnCl_4^{2(-)}$ | gelb |
| 49 | 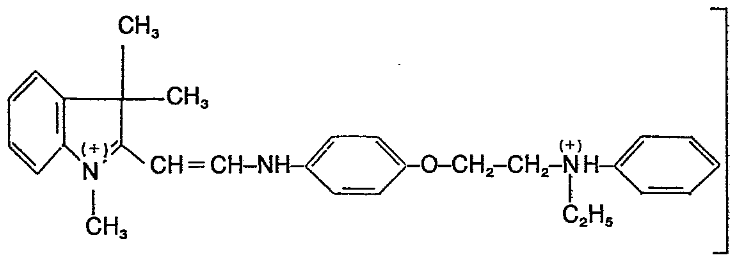 2 $BF_4^{(-)}$ | gelb |
| 50 | 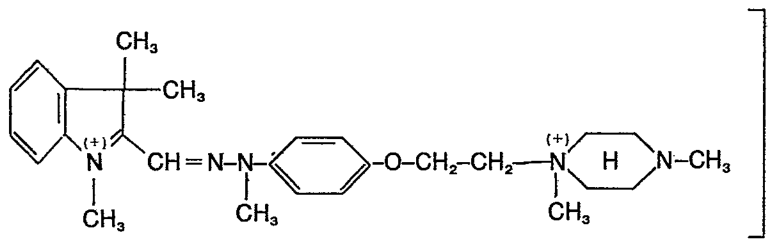 $ZnCl_4^{2(-)}$ | rotstichig gelb |
| 51 | 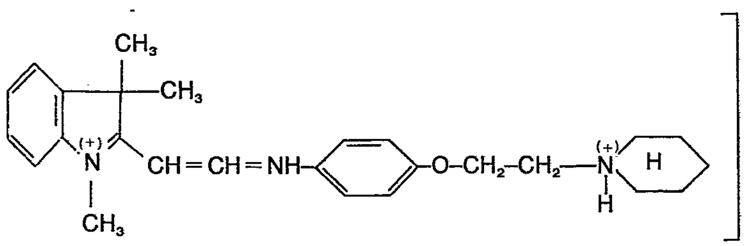 2 $Cl^{(-)}$ | gelb |
| 52 | 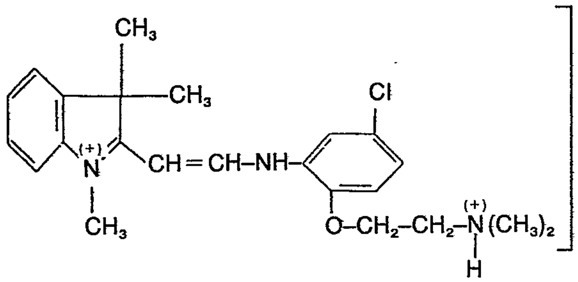 2 $BF_4^{(-)}$ | gelb |
| 53 | 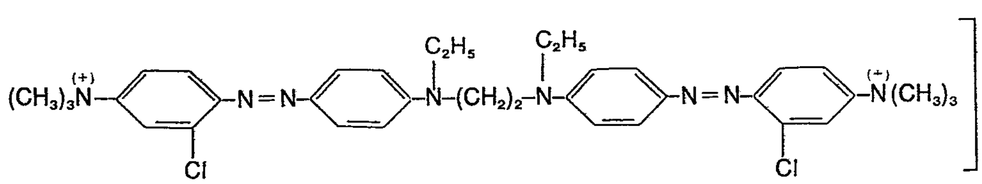 $ZnCl_4^{2(-)}$ | orange |

| Beispiel | Formel | Nuance |
|---|---|---|
| 54 | 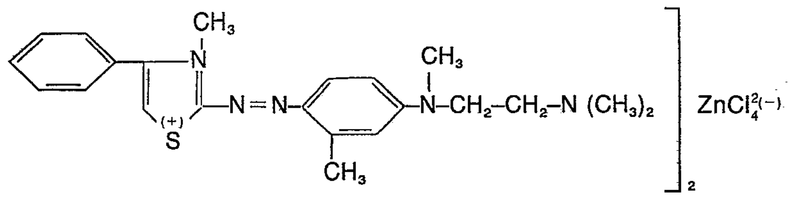 | rotstichig blau |
| 55 | 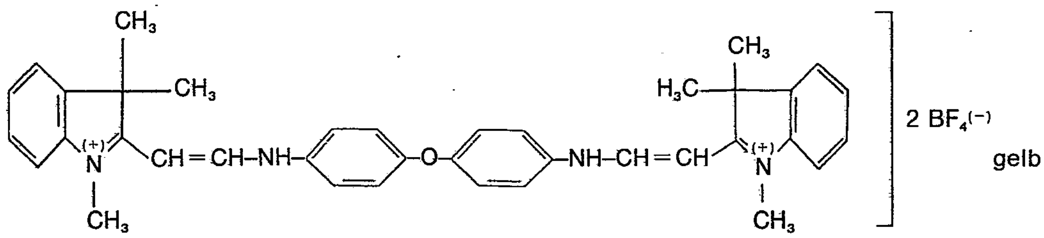 | gelb |
| 56 | 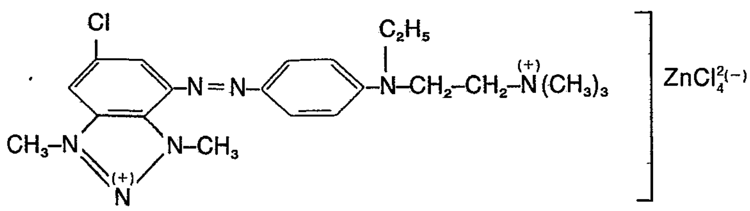 | bordo |
| 57 | 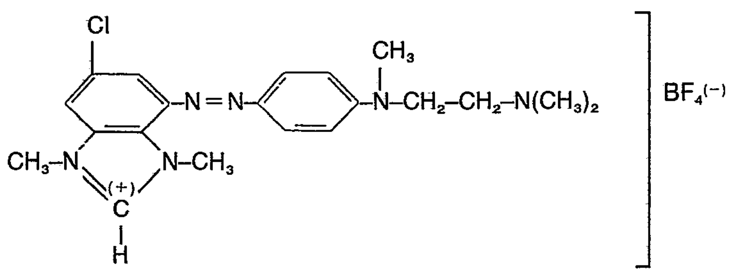 | rot |
| 58 | 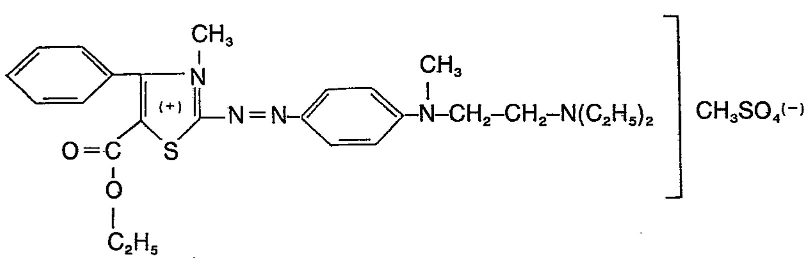 | blau |
| 59 | 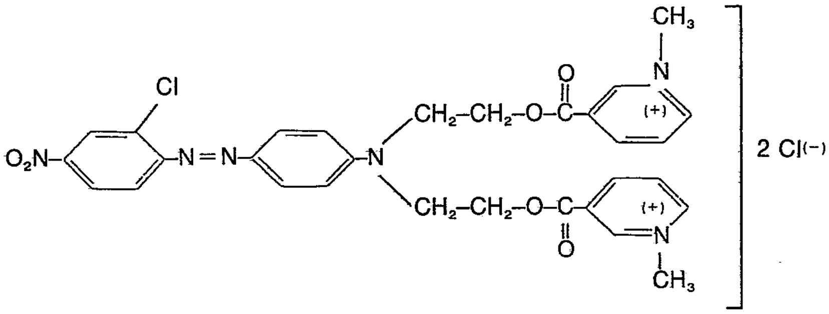 | rot |

| Beispiel | Formel | Nuance |
|---|---|---|
| 60 | 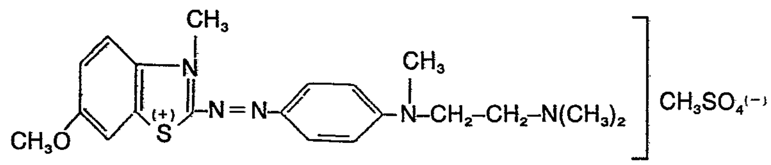 | blau |
| 61 | 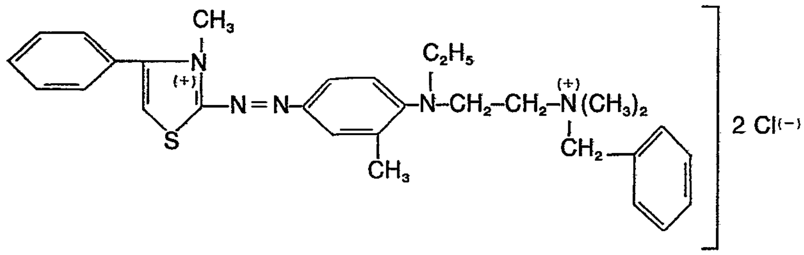 | violett |
| 62 | 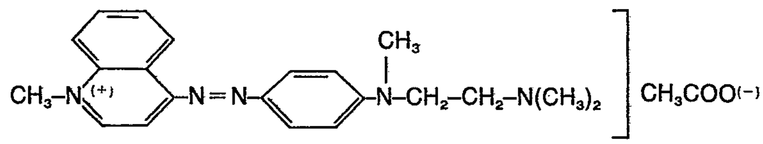 | blau |
| 63 | 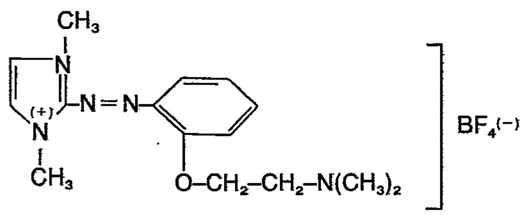 | rot |
| 64 | 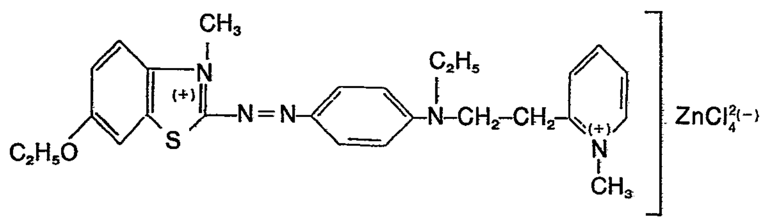 | blau |
| 65 | 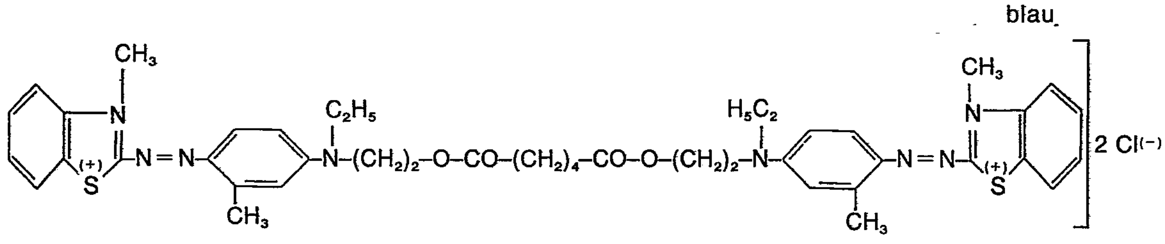 | blau |
| 66 | 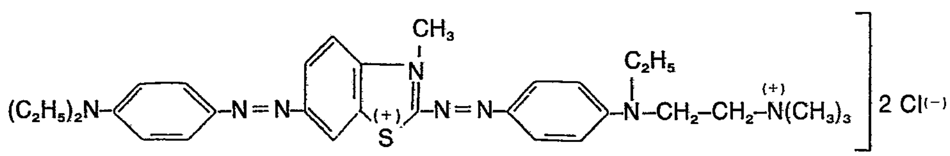 | blau |

| Beispiel | Formel | Nuance |
|---|---|---|
| 67 | 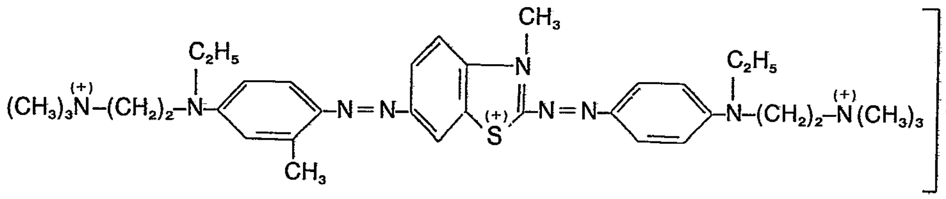 3 $Cl^{(-)}$ | blau |
| 68 | 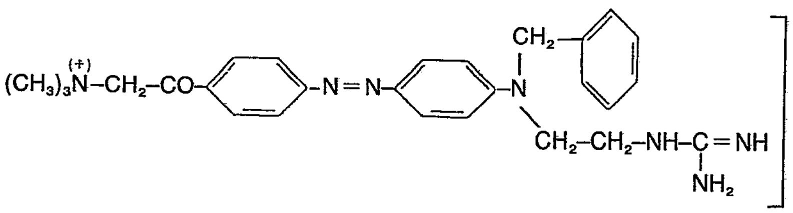 $Cl^{(-)}$ | orange |
| 69 | 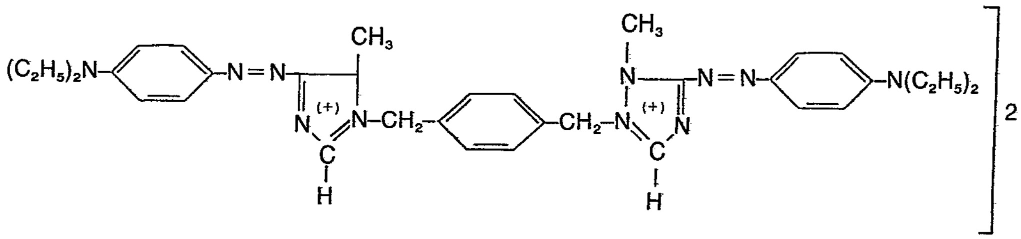 2 $CH_3COO^{(-)}$ | blaustichig rot |
| 70 | 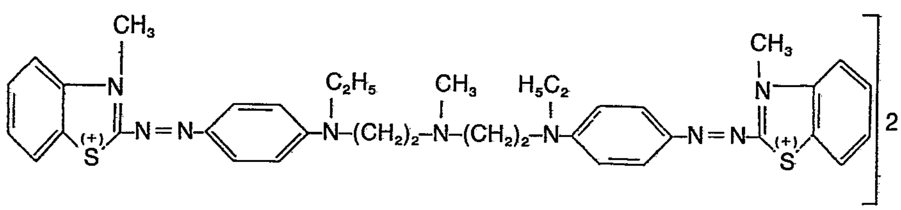 2 $BF_4^{(-)}$ | violett |
| 71 | 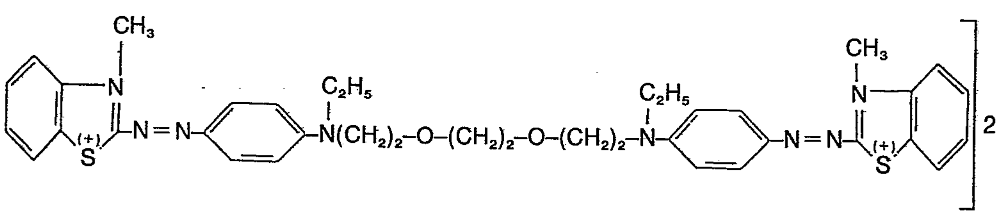 2 $BF_4^{(-)}$ | blau |
| 72 | 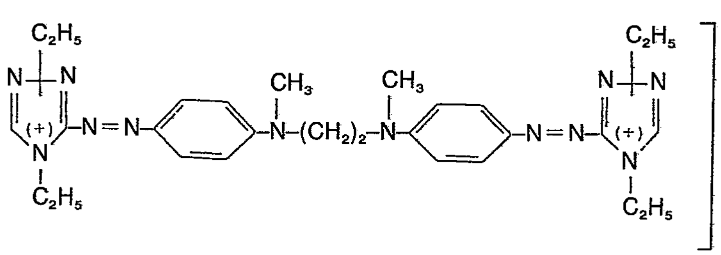 2 $BF_4^{(-)}$ | bordo |

| Beispiel | Formel | Nuance |
|---|---|---|
| 73 | 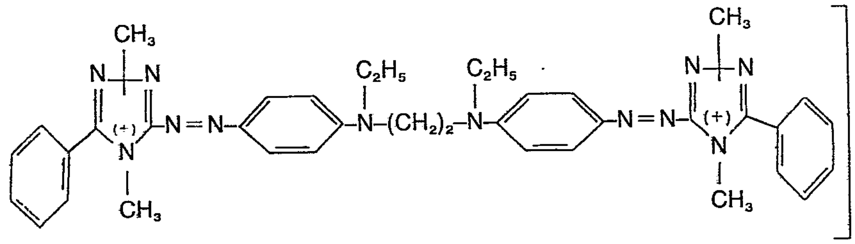 $ZnCl_4^{2(-)}$ | rot |
| 74 | 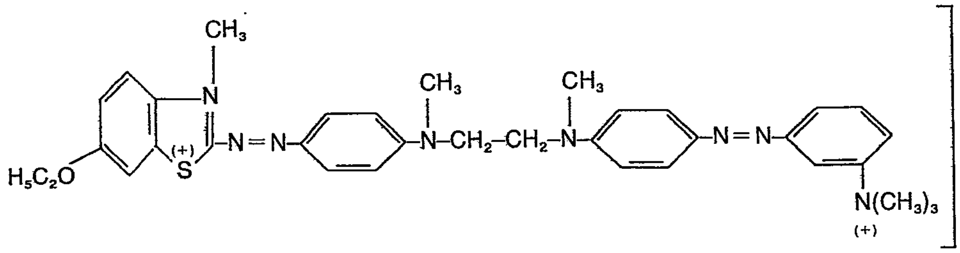 2 $Cl^{(-)}$ | grün |
| 75 | 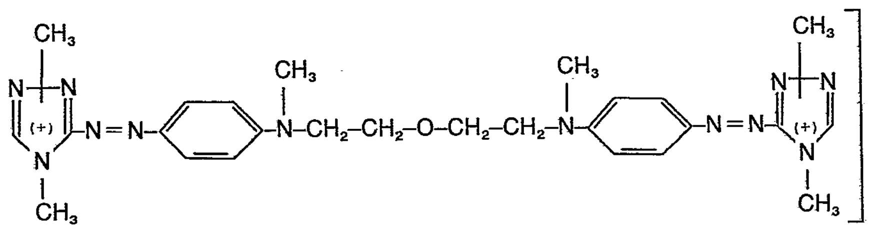 $SO_4^{2(-)}$ | rot |
| 76 | 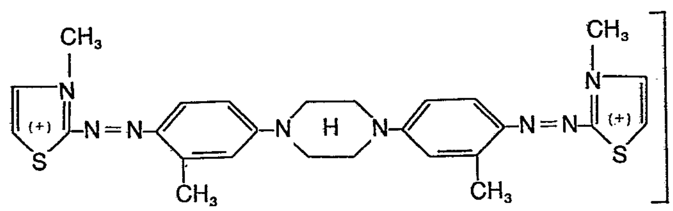 2 $Cl^{(-)}$ | violett |
| 77 | 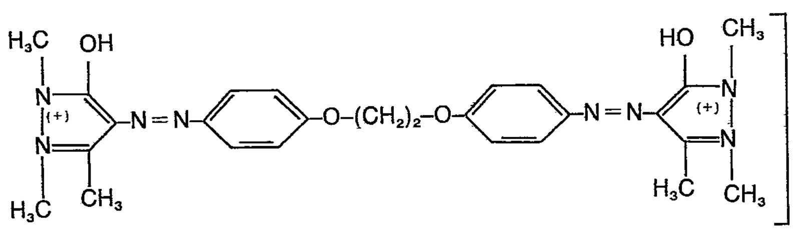 2 $BF_4^{(-)}$ | gelb |
| 78 | 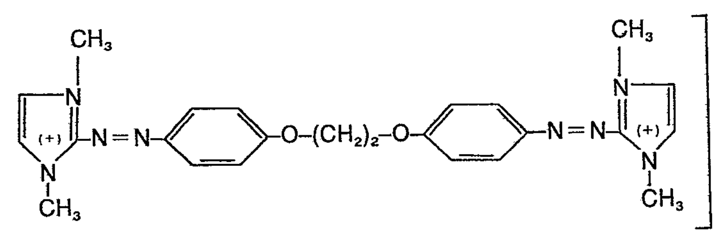 2 $BF_4^{(-)}$ | gelb |

| Beispiel | Formel | Nuance |
|---|---|---|
| 79 | 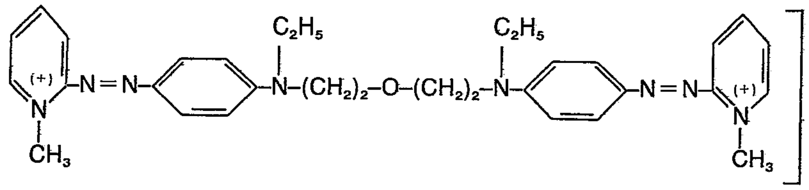 $2\ Cl^{(-)}$ | rotstichig violett |
| 80 | 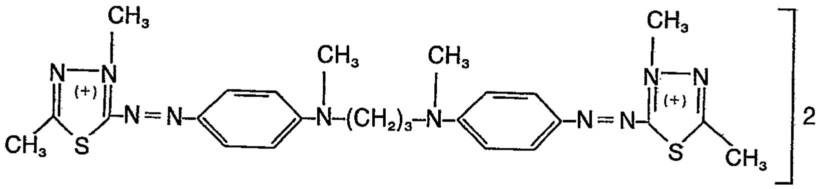 $2\ CNS^{(-)}$ | gelbstichig rot |
| 81 | 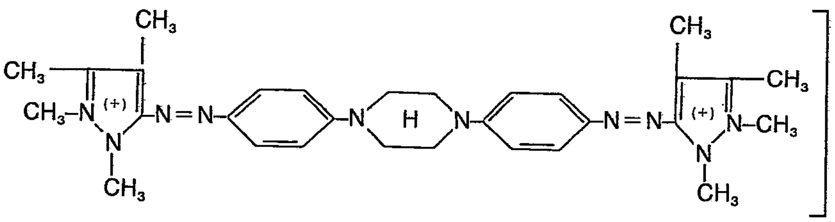 $2\ Cl^{(-)}$ | rot |
| 82 | 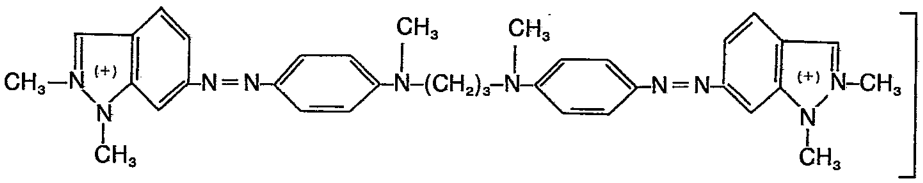 $2\ Cl^{(-)}$ | rot |
| 83 | 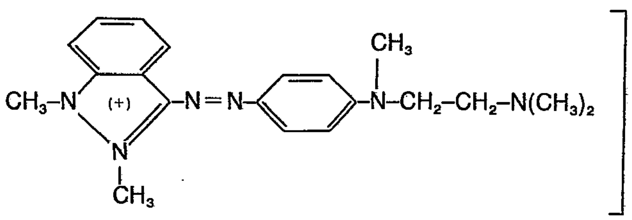 $BF_4^{(-)}$ | rot |
| 84 | 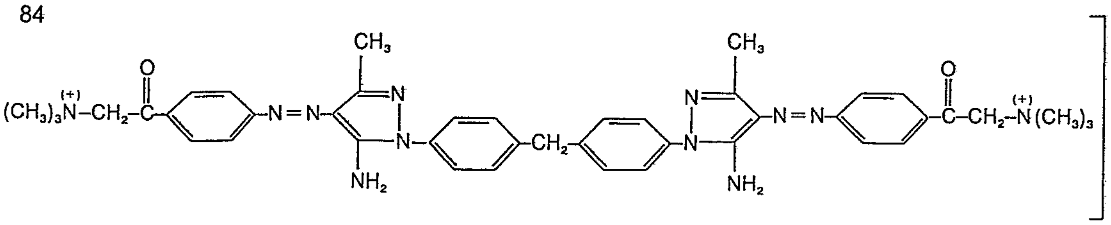 $2\ CH_3SO_4^{(-)}$ | rotstichig gelb |

| Beispiel | Formel | Nuance |
|---|---|---|
| 85 | 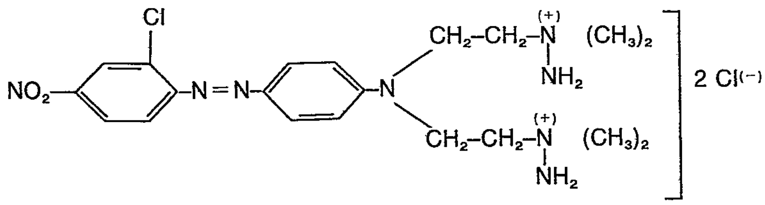 | gelbstichig rot |
| 86 | 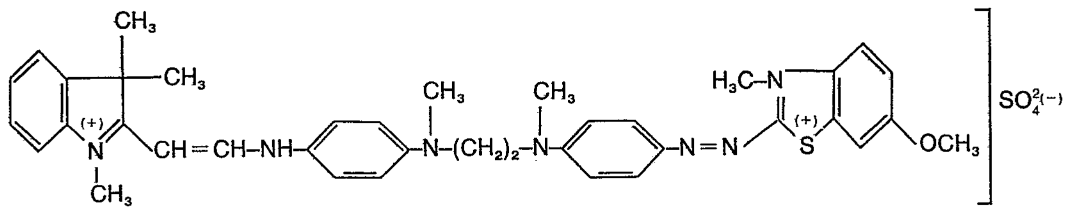 | grün |
| 87 | 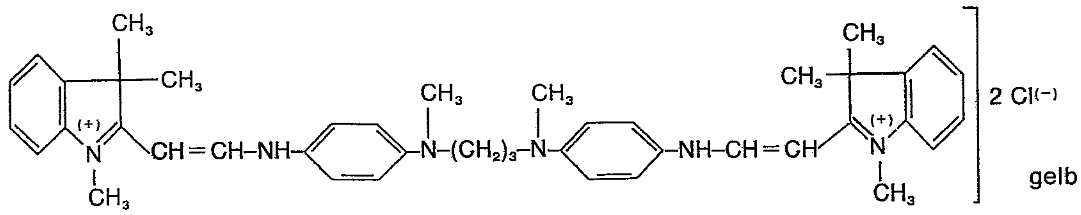 | gelb |
| 88 | 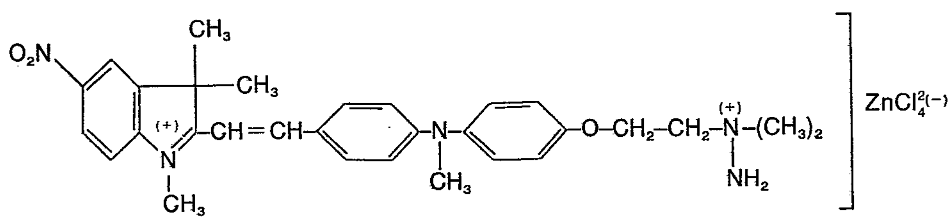 | blau |
| 89 | 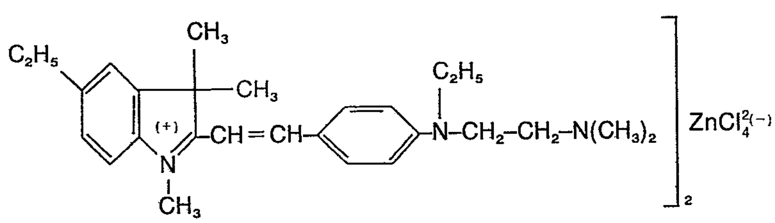 | rot |
| 90 | 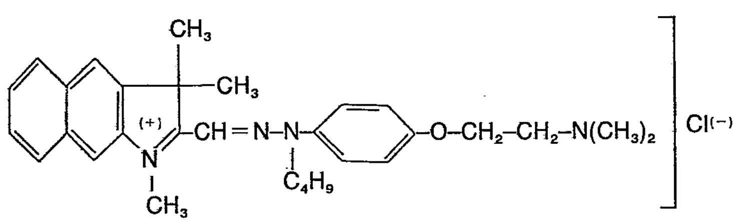 | orange |

| Beispiel | Formel | | Nuance |
|---|---|---|---|
| 91 | 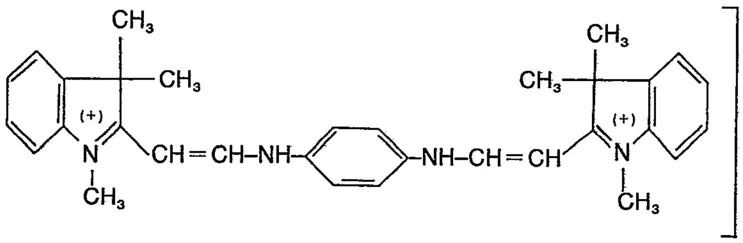 | 2 $Cl^{(-)}$ | rotstichig gelb |
| 92 | 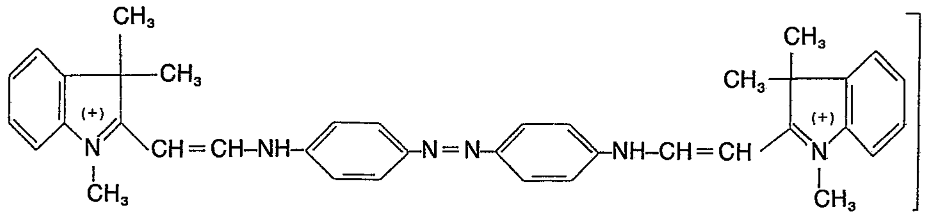 | 2 $Cl^{(-)}$ | rot |
| 93 | 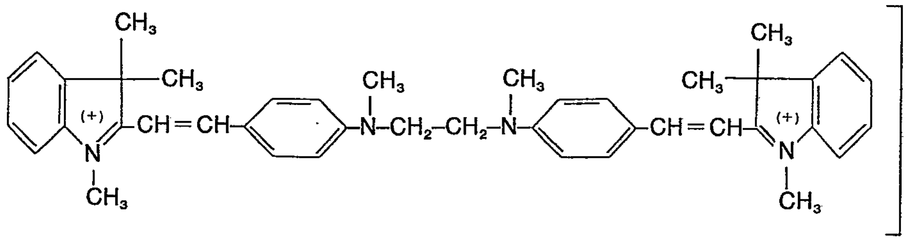 | 2 $CH_3COO^{(-)}$ | rot |
| 94 | 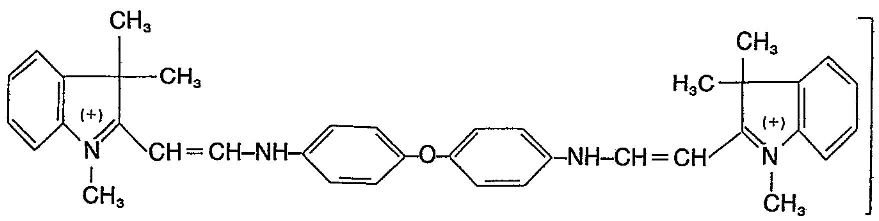 | 2 $SCN^{(-)}$ | rotstichig gelb |
| 95 | 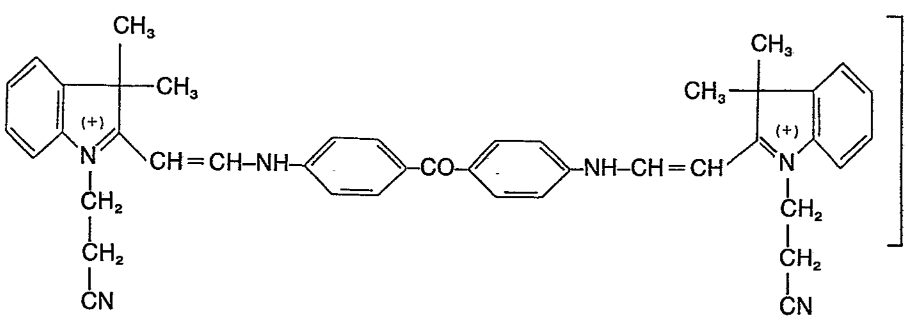 | 2 $Cl^{(-)}$ | gelb |
| 96 | 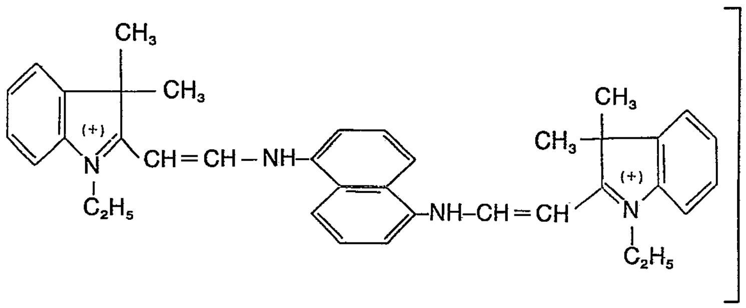 | 2 $BF_4^{(-)}$ | rotstichig gelb |

| Beispiel | Formel | | Nuance |
|---|---|---|---|
| 97 | 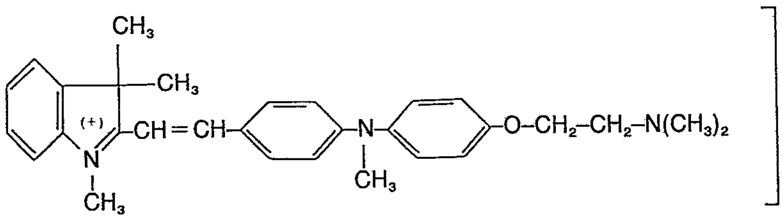 | $CH_3COO^{(-)}$ | violett |
| 98 | 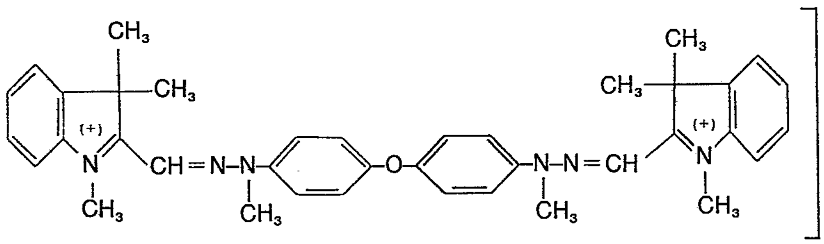 | $2\ BF_4^{(-)}$ | orange |
| 99 | 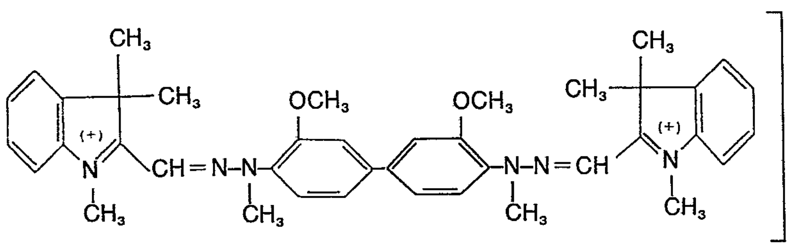 | $2\ CH_3COO^{(-)}$ | rotstichig gelb |
| 100 | 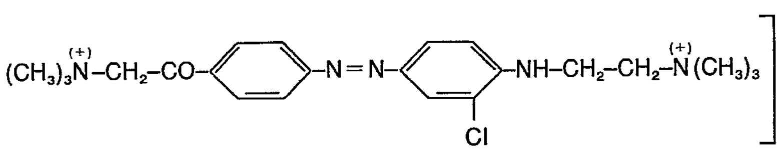 | $2\ Cl^{(-)}$ | rotstichig gelb |
| 101 | 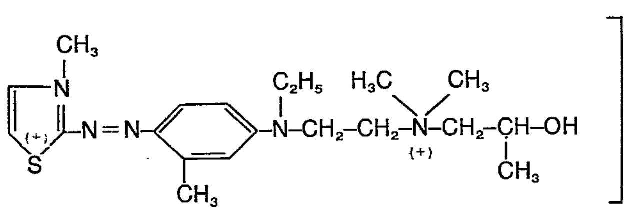 | $2\ Cl^{(-)}$ | violett |
| 102 | 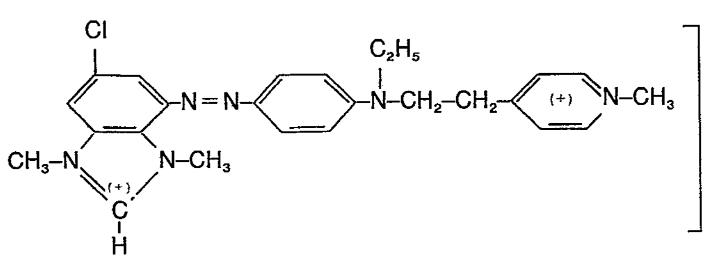 | $2\ BF_4^{(-)}$ | rot |

| Beispiel | Formel | Nuance |
| --- | --- | --- |
| 103 | 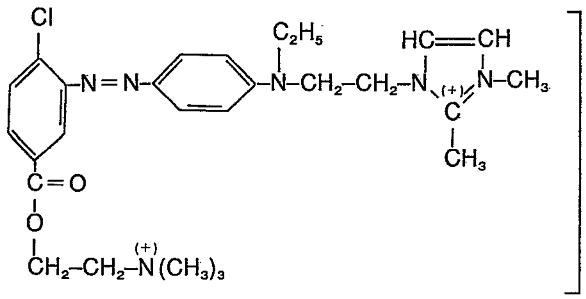 2 $BF_4^{(-)}$ | orange |
| 104 | 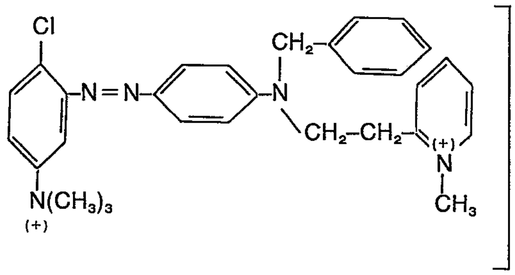 2 $Br^{(-)}$ | orange |
| 105 | 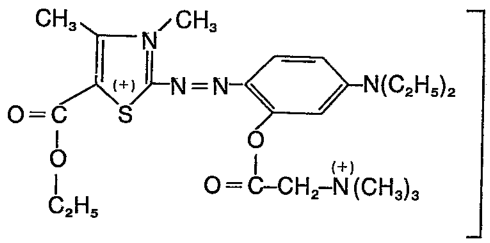 2 $BF_4^{(-)}$ | rotstichig blau |
| 106 | 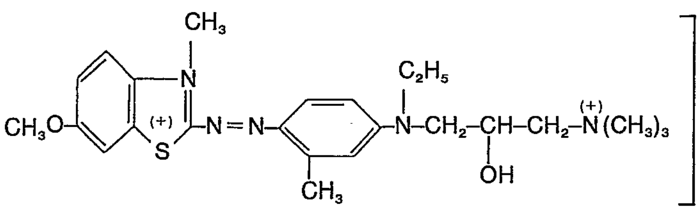 2 $BF_4^{(-)}$ | blau |
| 107 | 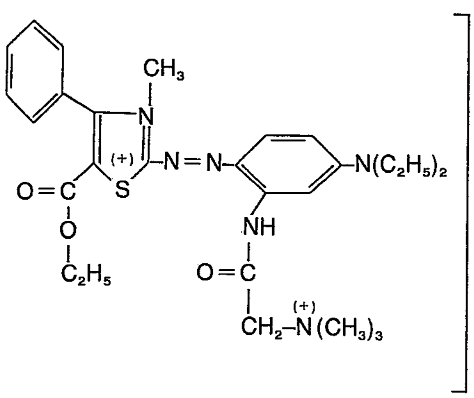 $ZnCl_4^{2(-)}$ | violett |

| Beispiel | Formel | Nuance |
|---|---|---|
| 108 | 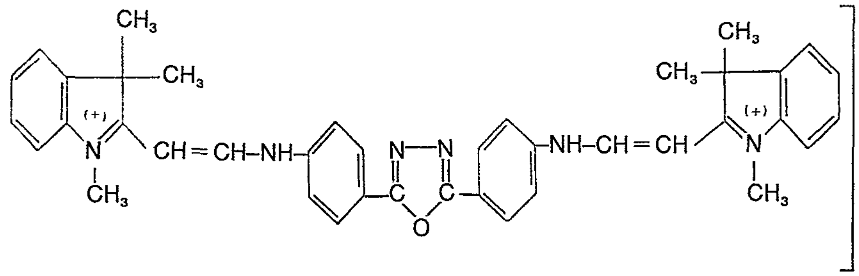 2 $BF_4^{(-)}$ | gelb |
| 109 | 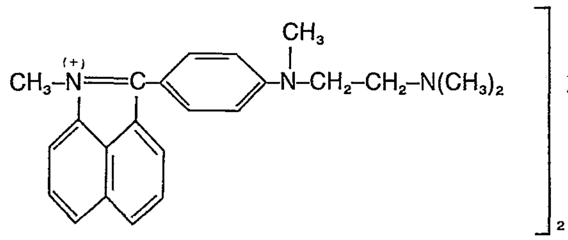 | blau |
| 110 | 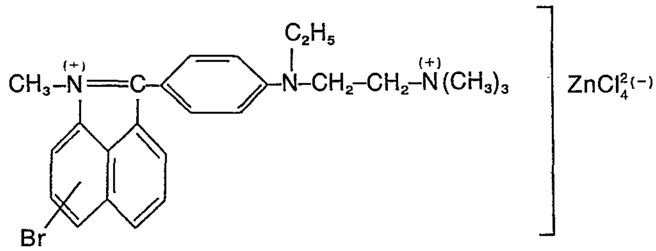 | blau |
| 111 | 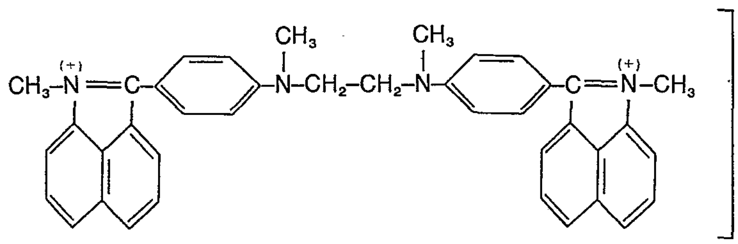 2 $BF_4^{(-)}$ | blau |
| 112 | 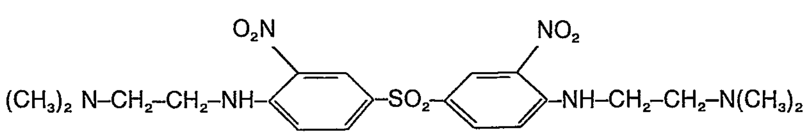 | gelb |

**Patentansprüche**

1. Verfahren zum Färben von nach einer üblichen Nassspinnmethode frisch geformtem Fasergut aus sauer-modifizierten Polymeren oder Mischpolymeren des Acrylnitrils, wobei man im Anschluss an die eigentliche Faserbildungsoperation das ungefärbte Spinngut in dem vorliegenden gequollenen, gelartigen Zustand sowie nach dem weitgehenden Entfernen des nicht-wässrigen Spinnlösemittels, entweder vor oder während oder nach der endgültigen Verstreckung, in einem flüssigen, im wesentlichen wässrigen Färbemedium der Einwirkung einer wässrigen Lösung von mindestens einem solchen Farbstoff, bei welchem der Färbevorgang durch eine Säure-Base-Reaktion zwischen Farbstoff und Faser zustandekommt, vorzugsweise unter schwach sauren Bedingungen bei Temperaturen des Behandlungsbades zwischen 10° und 100 °C aussetzt und zur Farbstoff-Fixierung für eine Verweilzeit zwischen 1 Sekunde und 10 Minuten darin belässt, dadurch gekennzeichnet, dass man basische Farbstoffe verwendet, die in ihrem Molekül mehr als eine

sich gegenüber den sauren Gruppen der Fasersubstanz salzbildend verhaltende Gruppe aufweisen.

2. Verfahren nach Anspruch 1, dadurch gekennzeichnet, dass man als basischen Farbstoff einen solchen verwendet, in dem die sich salzbildend verhaltenden Gruppen im Farbstoffmolekül mehr als eine quartäre Ammoniumgruppe, Dialkylhydrazoniumgruppe mit jeweils 1 bis 4 C-Atomen in den Alkylresten oder Cyclammoniumgruppe sind.

3. Verfahren nach Anspruch 1, dadurch gekennzeichnet, dass man als basischen Farbstoff einen solchen verwendet, in dem die sich salzbildend verhaltenden Gruppen im Farbstoffmolekül eine quartäre Ammoniumgruppe, Dialkylhydrazoniumgruppe mit jeweils 1 bis 4 C-Atomen in den Alkylresten oder Cyclammoniumgruppe und zusätzlich eine oder mehrere aliphatisch gebundene, primäre, sekundäre oder tertiäre Amino-, Guanidino-, Amidino- oder Hydrazinogruppen sind.

4. Verfahren nach Anspruch 1, dadurch gekennzeichnet, dass man als basischen Farbstoff einen solchen verwendet, in dem die sich salzbildend verhaltenden Gruppen im Farbstoffmolekül mehr als eine aliphatisch gebundene, primäre, sekundäre oder tertiäre Amino-, Guanidino-, Amidino- oder Hydrazinogruppe sind.

5. Verfahren nach einem der Ansprüche 1 bis 3, dadurch gekennzeichnet, dass man als basischen Farbstoff einen Monoazo-Farbstoff der allgemeinen Formel (1)

$$[D^{(+)}\text{–N=N–K}]\quad X^{(-)} \qquad (1)$$

oder 2 $X^{(-)}$,
falls K eine quartäre Gruppe enthält,

verwendet, in welcher

$D^{(+)}$ den Rest einer aromatischen carbo- oder heterocyclischen Diazokomponente bedeutet, die eine der in Anspruch 2 genannten quartären Gruppen besitzt, insbesondere eine Cyclammoniumgruppe als Bestandteil eines 5- oder 6-gliedrigen, aromatischen heterocyclischen Ringes, gegebenenfalls mit einem direkt daran gebundenen oder ankondensierten aromatischen carbocyclischen Rest, wobei diese Ringe in den heterocyclischen und/oder carbocyclischen Teilen substituiert sein können; oder eine an einen gegebenenfalls substituierten, aromatischen carbo- oder heterocyclischen Rest von D direkt gebundene oder über ein Brückenglied gebundene, substituierte Ammonium- oder Hydrazoniumgruppe; K den Rest einer aromatischen carbo- oder heterocyclischen Kupplungskomponente, insbesondere aus der Benzol-, Naphthalin- oder Indolreihe, darstellt mit mindestens einer ungeladenen basischen, an einem aromatischen Kern von K direkt oder über ein Brückenglied, aliphatisch gebundenen primären, sekundären oder tertiären Aminogruppe, oder einer quartären Ammoniumgruppe, gegebenenfalls als Bestandteil eines 5- oder 6-gliedrigen, aromatischen heterocyclischen Ringes, eines Amidins, Guanidins, Hydrazins oder eines Thiuroniumrestes, wobei diese aromatischen Ringe von K in den heterocyclischen und/oder carbocyclischen Teilen substituiert sein können; und

$X^{(-)}$ das Äquivalent eines Anions einer starken anorganischen oder organischen Säure oder eines Doppelsalzes ist.

6. Verfahren nach einem der Ansprüche 1 bis 3, dadurch gekennzeichnet, dass man als basischen Farbstoff einen Monoazo-Farbstoff der allgemeinen Formel (2a)

$$\left[D^{(+)}\text{–N=N–Ar–}\underset{\substack{|\\ R}}{N}\text{–B–}Q_1^{(+)}\ (\text{oder }-Q_2)\right]\ 2\ X^{(-)}\ \text{oder}\ X^{(-)} \qquad (2a)$$

oder der allgemeinen Formel (2b)

$$\left[D^{(+)}\text{–N=N–Ar–O–B–}Q_1^{(+)}\ (\text{oder }-Q_2)\right]\ 2\ X^{(-)}\ \text{oder}\ X^{(-)} \qquad (2b)$$

oder der allgemeinen Formel (2c)

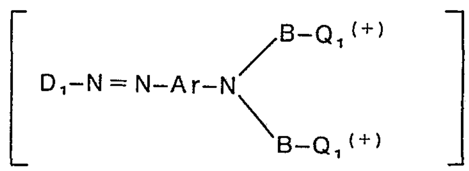

(2c)

verwendet, in welchen $D^{(+)}$ und $X^{(-)}$ die in Anspruch 5 angegebenen Bedeutungen besitzen;

$D_1$ für den Rest einer aromatischen carbo- oder heterocyclischen Diazokomponente, insbesondere aus der Benzol- oder Naphthalinreihe steht, der basische und/oder bevorzugt nicht-ionogene Substituenten enthalten kann;

Ar einen p-Phenylen- oder 1,4-Naphthylen-Rest darstellt, der bevorzugt durch 1 oder 2 nicht-ionogene Substituenten substituiert sein kann;

R ein Wasserstoffatom oder einen gegebenenfalls substituierten Alkylrest von 1–4 C-Atomen, einen Aralkyl- oder Cycloalkylrest bedeutet;

B ein zweiwertiges aliphatisches Brückenglied, insbesondere ein Alkylenrest von 1–6 C-Atomen, oder ein niederer Alkenylenrest ist;

$Q_1^{(+)}$ für eine (quartäre) Ammoniumgruppe, Hydrazoniumgruppe oder einen Cyclammoniumrest als Bestandteil eines 5- oder 6-gliedrigen, aromatischen heterocyclischen Ringes steht; und

$Q_2$ eine ungeladene basische primäre, sekundäre oder tertiäre Aminogruppe, die Bestandteil eines 5- oder 6-gliedrigen, aromatischen heterocyclischen Ringes sein können, oder eine Amidino-, Guanidino- oder Hydrazinogruppe darstellt.

7. Verfahren nach einem der Ansprüche 1 bis 3, dadurch gekennzeichnet, dass man als basischen Farbstoff einen Disazo-Farbstoff der allgemeinen Formel (3a)

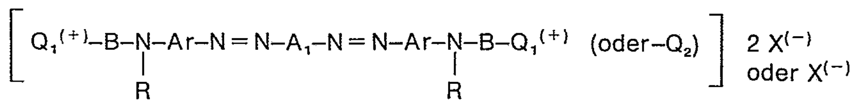
(3a)

oder der allgemeinen Formel (3b)

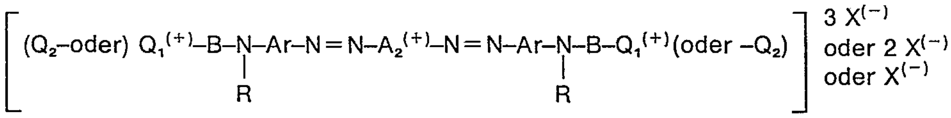
(3b)

verwendet, in welchen Ar, B, R, $Q_1^{(+)}$, $Q_2$ und $X^{(-)}$ die in Ansprüchen 5 und 6 genannten Bedeutungen besitzen, wobei die in den Formeln (3a) und (3b) jeweils zweifach auftretenden Formelreste jeweils gleich oder verschieden voneinander sein können;

$A_1$ für den Rest einer aromatischen carbo- oder heterocyclischen Tetrazokomponente steht;

$A_2^{(+)}$ den Rest einer aromatischen carbo- oder heterocyclischen Tetrazokomponente mit mindestens einer quartären Gruppierung wie in Anspruch 2, insbesondere als Bestandteil eines 5- oder 6-gliedrigen, aromatischen heterocyclischen Ringes, darstellt;

und wobei die Formelreste $Q_1^{(+)}$ sowie $Q_2$ – beide zusammen oder jeder einzeln für sich allein – auch direkt oder lediglich über das Brückenglied B an den jeweils zugehörigen Arylenrest Ar gebunden sein können, dann jedoch als Auswahlregel gilt, dass ein in Formel (3a) gegebenenfalls vorhandener Rest $Q_2$ nicht unmittelbar mit Ar verbunden sein kann und dass entsprechend Formel (3b) im Falle von zwei beiderseitig an die Ar direkt gebundenen Resten $Q_2$ der Rest der Tetrazokomponente $A_2^{(+)}$ mehr als eine quartäre Gruppierung wie in Anspruch 2 aufweisen muss.

8. Verfahren nach Anspruch 1 oder 2, dadurch gekennzeichnet, dass man als basischen Farbstoff einen Disazo-Farbstoff der allgemeinen Formel (4a)

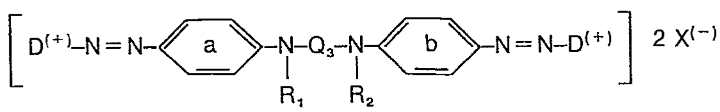
(4a)

oder der allgemeinen Formel (4b)

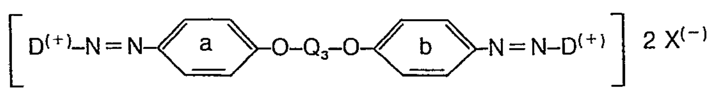
(4b)

verwendet, in welchen $D^{(+)}$ gleich oder verschieden sind und jedes $D^{(+)}$ sowie auch $X^{(-)}$ die in Anspruch 5 angegebenen Bedeutungen besitzen;

$Q_3$ einen Alkylenrest mit bis zu 8 C-Atomen darstellt, der gegebenenfalls durch –O–, –NH– oder einen aromatischen carbocyclischen Rest unterbrochen ist;

$R_1$ und $R_2$ gleich oder verschieden sind und jedes ein Wasserstoffatom oder eine gegebenenfalls substituierte Alkylgruppe von 1–4 C-Atomen darstellt, oder $R_1$ und $R_2$ zusammen mit den beiden Stickstoffatomen und dem Rest $Q_3$ einen heterocyclischen Ring bilden;

und die Benzolkerne a und b durch 1 oder 2 nicht-ionogene Substituenten gleich oder verschieden substituiert sein können oder die Benzolkerne a oder b oder beide jeweils mit einem ankondensierten Benzolkern einen Naphthylenrest bilden.

9. Verfahren nach einem der Ansprüche 1 bis 2, dadurch gekennzeichnet, dass man als basischen Farbstoff einen Methin-Farbstoff der allgemeinen Formel (5)

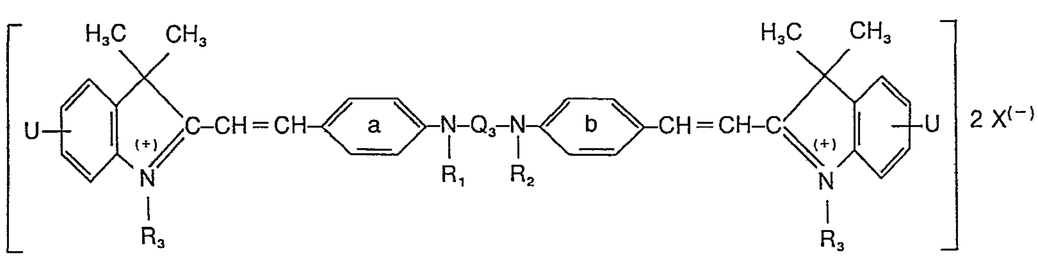
(5)

verwendet, in welcher $Q_3$, $R_1$, $R_2$, a und b und $X^{(-)}$ die in Ansprüchen 5 und 8 genannten Bedeutungen besitzen;

$R_3$ einen gegebenenfalls substituierten Alkylrest von 1–4 C-Atomen oder einen Aralkylrest bedeutet; und

U beide gleich oder verschieden sind und jedes für ein Wasserstoffatom oder einen nicht-ionogenen Substituenten steht.

10. Verfahren nach einem der Ansprüche 1 bis 2, dadurch gekennzeichnet, dass man als basischen Farbstoff einen Azamethin-Farbstoff der allgemeinen Formel (6)

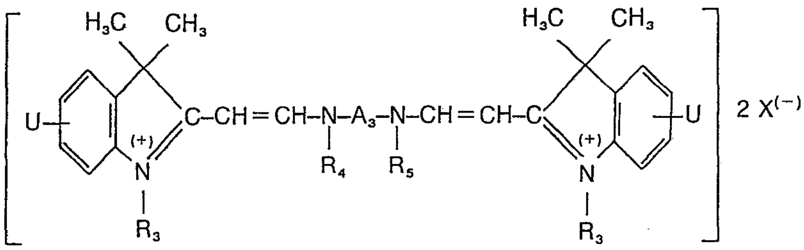

(6)

oder einen Diazamethin-Farbstoff der allgemeinen Formel (7)

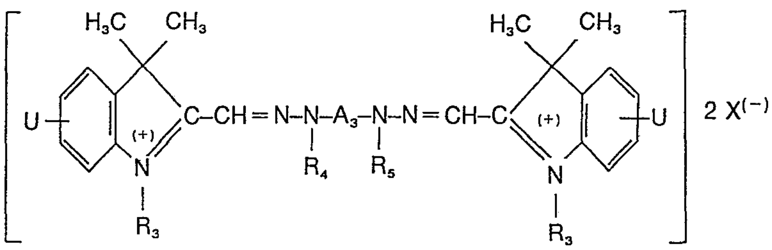

(7)

verwendet, in welchen $R_3$, U und $X^{(-)}$ die in Ansprüchen 5 und 9 genannten Bedeutungen besitzen;

$A_3$ für den bivalenten Rest eines oder mehrerer aromatischer carbo- oder heterocyclischer Kerne steht, die noch durch nicht-aromatische Brückenglieder miteinander verbunden sein können; und

$R_4$ und $R_5$ gleich oder verschieden sind und jedes ein Wasserstoffatom oder einen gegebenenfalls substituierten Alkylrest von 1–4 C-Atomen steht.

11. Verfahren nach einem der Ansprüche 1 bis 3, dadurch gekennzeichnet, dass man als basischen Farbstoff einen Methinfarbstoff der allgemeinen Formel (8)

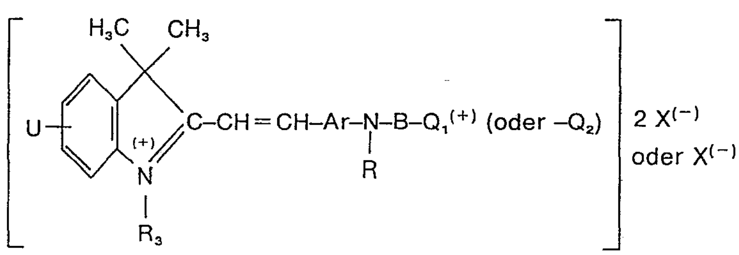

(8)

verwendet, worin Ar, B, R, $R_3$, $Q_1^{(+)}$, $Q_2$, U und $X^{(-)}$ die in den Ansprüchen 5, 6 und 9 angegebenen Bedeutungen besitzen.

12. Verfahren nach einem der Ansprüche 1 bis 3, dadurch gekennzeichnet, dass man als basischen Farbstoff einen Azamethin- oder Diazamethin-Farbstoff der allgemeinen Formel (9)

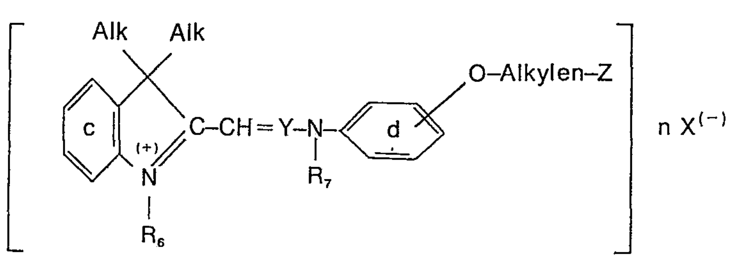

(9)

verwendet, in welcher $X^{(-)}$ die in Anspruch 5 angegebene Bedeutung besitzt;

$R_6$ eine Alkylgruppe von 1 bis 4 C-Atomen, die nicht-ionogen substituiert sein kann, darstellt;

Alk jeweils eine Alkylgruppe von 1 bis 4 C-Atomen bedeutet, wobei beide gleich oder verschieden voneinander sein können;

Y für den Methinrest (CH) oder ein Stickstoffatom steht;

$R_7$ ein Wasserstoffatom oder eine Alkylgruppe von 1 bis 4 C-Atomen, die nicht-ionogen substituiert sein kann, darstellt;

Alkylen für eine geradkettige oder verzweigte Alkylengruppe von 2 bis 6 C-Atomen steht;

Z eine Gruppe der Formel (9a) oder (9b)

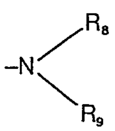 (9a) 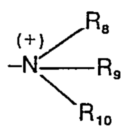 (9b)

bedeutet, in welchen

$R_8$ eine Alkylgruppe von 1 bis 4 C-Atomen ist, die nicht-ionogen substituiert sein kann,

$R_9$ eine Alkylgruppe von 1 bis 4 C-Atomen ist, die nicht-ionogen substituiert sein kann, oder der Phenylrest ist, gegebenenfalls mit 1 oder 2 nicht-ionogenen Substituenten,

$R_{10}$ ein Wasserstoffatom oder eine Alkylgruppe von 1 bis 4 C-Atomen ist, die nicht-ionogen substituiert sein kann,

oder in welchen

$R_8$ und $R_9$ zusammen mit dem Stickstoffatom einen 5-, 6- oder 7-gliedrigen heterocyclischen Rest bilden, oder $R_8$ und $R_9$ oder $R_8$, $R_9$ und $R_{10}$ zusammen mit dem positiv geladenen Stickstoffatom einen 5-, 6- oder 7-gliedrigen heterocyclischen Rest bilden, wobei $R_{10}$ entweder Teil des heterocyclischen Restes oder ein Wasserstoffatom oder die zuvor genannte Alkylgruppe sein kann;

die Benzolkerne c und d jeweils durch 1 oder 2 nicht-ionogene Substituenten gleich oder verschieden substituiert sein können; und

n für die Zahl 1 oder 2 steht.

13. Verfahren nach einem der Ansprüche 1 bis 3, dadurch gekennzeichnet, dass man als basischen Farbstoff einen Naphthalactam-Farbstoff der allgemeinen Formel (10) oder (11)

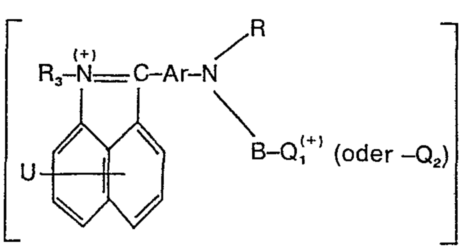 2 $X^{(-)}$ oder $X^{(-)}$ (10)

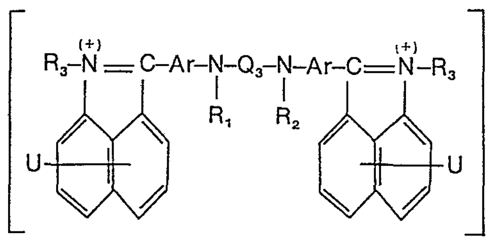 2 $X^{(-)}$ (11)

verwendet, in denen Ar, B, $Q_1^{(+)}$, $Q_2$, $Q_3$, R, $R_1$, $R_2$, $R_3$, U und $X^{(-)}$ die in den Ansprüchen 5, 6, 8 und 9 angegebenen Bedeutungen besitzen und wobei die in Formel (11) jeweils zweifach auftretenden Substituenten gleich oder verschieden voneinander sein können.

14. Verfahren nach einem der Ansprüche 1 bis 4, dadurch gekennzeichnet, dass man als basischen Farbstoff eine Verbindung der allgemeinen Formel (12) oder (13)

$$[(Q_2\text{– oder) } Q_1^{(+)}\text{–B–}Y_1\text{–B–}Q_1^{(+)} \text{ (oder –}Q_2)]m\ X^{(-)} \quad (12)$$

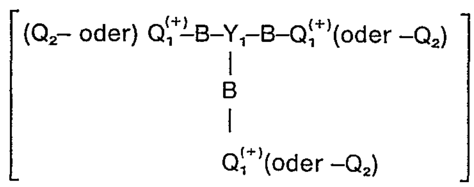 m $X^{(-)}$ (13)

verwendet, in denen B, $Q_1^{(+)}$, $Q_2$ und $X^{(-)}$ die in den Ansprüchen 5 und 6 angegebenen Bedeutungen besitzen und wobei die in den Formeln (12) und (13) jeweils mehrfach auftretenden Substituenten gleich oder verschieden voneinander sein können;

$Y_1$ den Rest eines Farbstoffchromophors, insbesondere auf Basis einer Kupferphthalocyanin-, Anthrachinon- oder Triphenylmethan-Verbindung darstellt; und

m für 0, 1, 2 oder 3 steht.

15. Verfahren nach einem der Ansprüche 1 bis 14, dadurch gekennzeichnet, dass man Gemische dieser basischen Farbstoffe verwendet.

## Claims

1. Process for dyeing a fiber material composed of an acid-modified polymer or copolymer of acrylonitrile freshly shaped by a conventional wet spinning method, wherein following the actual fiber-forming step the undyed spun product in the thus available swollen gellike state and subsequently of removing the bulk of the non-aqueous spinning solvent, either before or during or after the concluding fiber stretching operation, is exposed in a liquid substantially aqueous dyeing medium to the effect of an aqueous solution of at least one of such a dyestuff with the use of which the dyeing operation is occurring by an Acid-Base Reaction between the dyestuff and the fiber,

preferably under weakly acid conditions at temperatures of the treating bath between 10° and 100 °C, and left in the latter to cause dyestuff fixation for a dwelling period between 1 second and 10 minutes, characterized in that basic type dyestuffs are employed containing in the chromophoric molecule more than one grouping capable of entering into salt formation towards the acid groups of the fiber substance.

2. Process as claimed in claim 1, characterized in that as the basic type dyestuff is used a such one having in the chromophoric molecule as the groupings capable of entering into salt formation more than one quaternary ammonium group, dialkyl hydrazonium group which has in each alkyl moiety of from 1 to 4 C atoms, or cyclammonium group.

3. Process as claimed in claim 1, characterized in that as the basic type dyestuff is used a such one having in the chromophoric molecule as the groupings capable of entering into salt formation one quaternary ammonium group, dialkyl hydrazonium group which has in each alkyl moiety of from 1 to 4 C atoms, or cyclammonium group and, in addition, one or more aliphatically linked, primary, secondary or tertiary amino group, or guanidino, amidino or hydrazino group.

4. Process as claimed in claim 1, characterized in that as the basic type dyestuff is used a such one having in the chromophoric molecule as the groupings capable of entering into salt formation more than one aliphatically linked, primary, secondary or tertiary amino group, or guanidino, amidino or hydrazino group.

5. Process as claimed in any one of claims 1 to 3, characterized in that as the basic type dyestuff is used a monoazo dyestuff of the general formula (1)

$$[D^{(+)}-N=N-K]X^{(-)} \text{ or } 2\,X^{(-)}, \qquad (1)$$
if K contains a quaternary moiety,

in which $D^{(+)}$ denotes the radical of an aromatic carbocyclic or heterocyclic diazo component which contains one of the quaternary moieties mentioned in claim 2, in particular a cyclammonium group as constituent of a 5-membered or 6-membered, aromatic heterocyclic ring, if appropriate having directly linked or fused thereto an aromatic carbocyclic moiety, it being possible for these rings to be substituted in the heterocyclic and/or carbocyclic parts; or said radical contains as the quaternary moiety a substituted ammonium or hydrazonium group which is linked directly or via a bridge member to an optionally substituted, aromatic carbocyclic or heterocyclic moiety of D;

K represents the radical of an aromatic carbocyclic or heterocyclic coupling component, particularly a component belonging to the benzene, naphthalene or indole series, containing attached to an aromatic nucleus of K directly or via a bridge member at least one uncharged basic moiety comprising an aliphatically linked, primary, secondary or tertiary amino group, or a quaternary ammonium group, if appropriate as constituent of a 5-membered or 6-membered, aromatic heterocyclic ring, or an amidino, guanidino, hydrazino of thiuronium radical, it being possible for these rings of K to be substituted in the heterocyclic and/or carbocyclic parts;

and $X^{(-)}$ is the equivalent of an anion of a strong inorganic or organic acid or of a double salt.

6. Process as claimed in any one of claims 1 to 3, characterized in that as the basic type dyestuff is used a monoazo dyestuff or the general formula (2a)

$$\left[D^{(+)}-N=N-Ar-\underset{\displaystyle R}{\underset{|}{N}}-B-Q_1^{(+)} \quad (\text{or } -Q_2)\right] \begin{matrix} 2\,X^{(-)} \\ \text{or } X^{(-)} \end{matrix} \qquad (2a)$$

or of the general formula (2b)

$$\left[D^{(+)}-N=N-Ar-O-B-Q_1^{(+)} \quad (\text{or } -Q_2)\right] \begin{matrix} 2\,X^{(-)} \\ \text{or } X^{(-)} \end{matrix} \qquad (2b)$$

or of the general formula (2c)

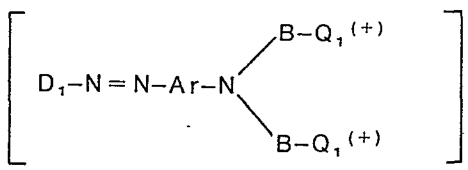
$2\,X^{(-)}$

(2c)

in which $D^{(+)}$ and $X^{(-)}$ have the meanings indicated in claim 5;

$D_1$ represents the radical of an aromatic carbocyclic or heterocyclic diazo component, particularly a component belonging to the benzene or naphthalene series, which radical can contain basic and/or preferably non-ionic substituents;

Ar represents a p-phenylene or 1,4-naphthylene radical which can be substituted preferably by 1 or 2 non-ionic substituents;

R denotes a hydrogen atom or an optionally substituted alkyl radical of from 1 to 4 C atoms, or an aralkyl or cycloalkyl radical;

B is a bivalent aliphatic bridge member, in particular an alkylene radical of from 1 to 6 C atoms, or a lower alkenylene radical;

$Q_1^{(+)}$ represents a quaternary ammonium group, hydrazonium group or a cyclammonium radical as constituent of a 5-membered or 6-membered, aromatic heterocyclic ring;

and $Q_2$ represents an uncharged basic moiety comprising a primary, secondary or tertiary amino group which can be constituent of a 5-membered or 6-membered, aromatic heterocyclic ring, or represents an amidino, guanidino or hydrazino group.

7. Process as claimed in any one of claims 1 to 3, characterized in that as the basic type dyestuff is used a disazo dyestuff of the general formula (3a)

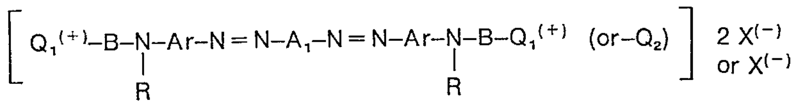
(3a)

or of the general formula (3b)

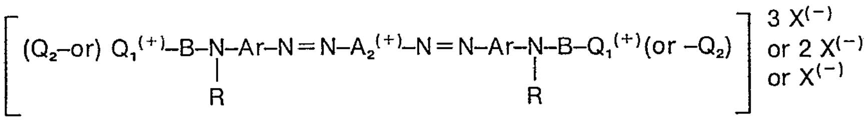
(3b)

in which Ar, B, R, $Q_1^{(+)}$, $Q_2$ and $X^{(-)}$ have the meanings indicated in claims 5 and 6, it being possible for the substituents which each occur twice in the formulae (3a) and (3b) to be identical to or different from one another;

$A_1$ represents the radical of an aromatic carbocyclic or heterocyclic tetrazo component;

$A_2^{(+)}$ represents the radical of an aromatic carbocyclic or heterocyclic tetrazo component containing at least one of the quaternary moieties mentioned in claim 2, in particular as constituent of a 5-membered or 6-membered, aromatic heterocyclic ring;

and the radicals $Q_1^{(+)}$ and $Q_2$ – both together or each individually on its own – can also be linked directly or merely via the bridge member B to the respective arylene radical Ar to which they are attached, but when occurring then the following proviso applies, that a radical $Q_2$ which may be present in formula (3a) must not be linked directly to Ar, and as regards formula (3b), when there are two radicals $Q_2$ linked directly on either side to the Ar's, the radical of the tetrazo component $A_2^{(+)}$ must contain more than one of the quaternary moieties mentioned in claim 2.

8. Process as claimed in claim 1 or 2, characterized in that as the basic dyestuff is used a disazo dyestuff of the general formula (4a)

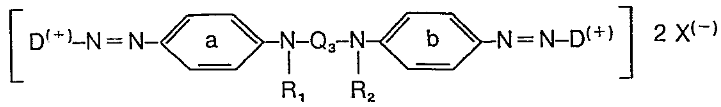
(4a)

or of the general formula (4b)

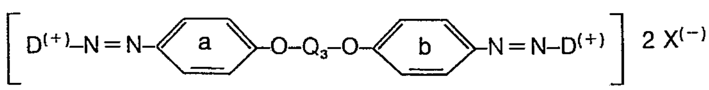
(4b)

in which the $D^{(+)}$'s are identical to or different from one another and each $D^{(+)}$ and also $X^{(-)}$ have the meanings indicated in claim 5;

$Q_3$ represents an alkylene radical having up to 8 C atoms which is optionally interrupted by –O–, –NH– or a bivalent aromatic carbocyclic moiety;

$R_1$ and $R_2$ are identical to or different from one another and each represents a hydrogen atom or an optionally substituted alkyl group of from 1 to 4 C atoms, or $R_1$ and $R_2$ – together with the two nitrogen atoms to which they are attached and the radical $Q_3$ – form a heterocyclic ring;

and each of the benzene nuclei a and b can have 1 or 2 identical or different non-ionic substituents, or the benzene nuclei a or b, or both, in each case together with a fused benzene nucleus, can form a naphthylene moiety.

9. Process as claimed in claim 1 or 2, characterized in that as the basic type dyestuff is used a methine dyestuff of the general formula (5)

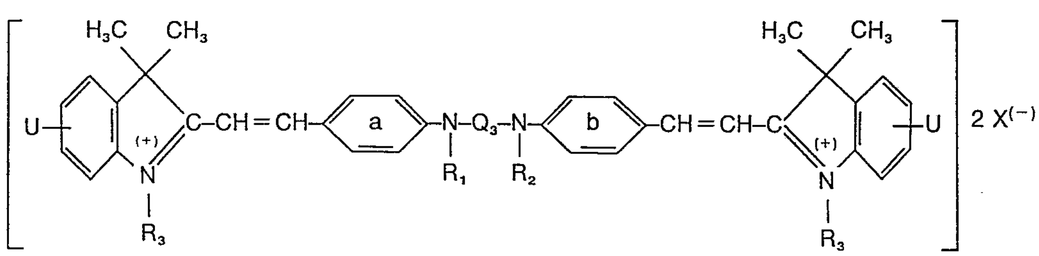
(5)

in which $Q_3$, $R_1$, $R_2$, a and b and $X^{(-)}$ have the meanings mentioned in claims 5 and 8;

$R_3$ denotes an optionally substituted alkyl radical of from 1 to 4 C atoms, or an aralkyl radical;

and the two U's are identical to or different from one another and each represents a hydrogen atom or a non-ionic substituent.

10. Process as claimed in claim 1 or 2,

characterized in that as the basic type dyestuff is used an azamethine dyestuff of the general formula (6)

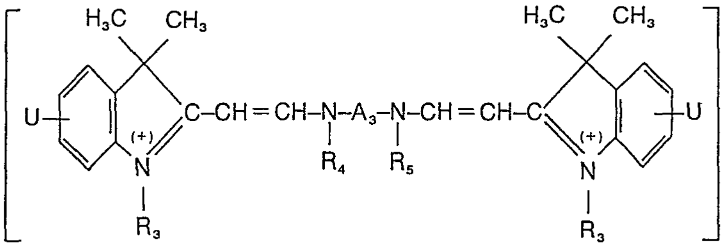

$2\ X^{(-)}$ (6)

or a diazamethine dye of the general formula (7)

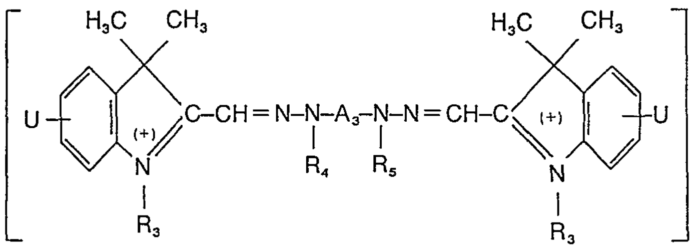

$2\ X^{(-)}$ (7)

in which $R_3$, U and $X^{(-)}$ have the meanings mentioned in claims 5 and 9;

$A_3$ represents the bivalent radical of one or more aromatic carbocyclic or heterocyclic nuclei which, when occurring several times, can be linked to one another by non-aromatic bridge members;

and $R_4$ and $R_5$ are identical to or different from one another and each represents a hydrogen atom or an optionally substituted alkyl radical of from 1 to 4 C atoms.

11. Process as claimed in any one of claims 1 to 3, characterized in that as the basic type dyestuff is used a methine dyestuff of the general formula (8)

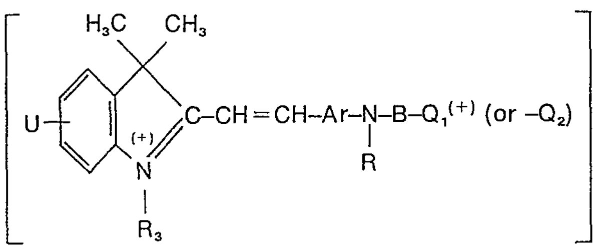

$2\ X^{(-)}$ or $X^{(-)}$ (8)

in which Ar, B, R, $R_3$, $Q_1^{(+)}$, $Q_2$, U and $X^{(-)}$ have the meanings inidcated in claims 5, 6 and 9.

12. Process as claimed in any one of claims 1 to 3, characterized in that as the basic type dyestuff is used an azamethine or diazamethine dyestuff of the general formula (9)

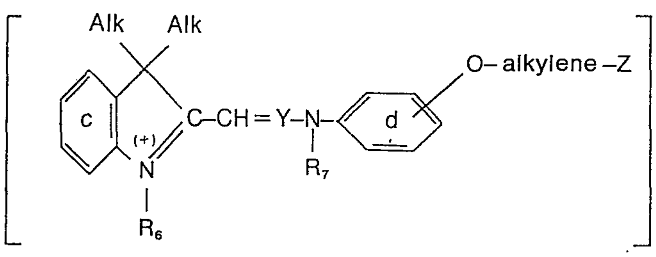

$n\ X^{(-)}$ (9)

in which $X^{(-)}$ has the meaning indicated in claim 5;

$R_6$ represents an alkyl group of from 1 to 4 C atoms which can have non-ionic substituents;

"Alk" denotes in each case an alkyl group of from 1 to 4 C atoms, it being poosible for the two groups to be identical to or different from one another;

Y represents the methine bridge member (CH) or a nitrogen atom;

$R_7$ represents a hydrogen atom or an alkyl group of from 1 to 4 C atoms which can have non-ionic substituents;

"alkylene" represents a straight-chain or branched alkylene group of from 2 to 6 C atoms;

Z denotes a group of the formula (9a) or (9b)

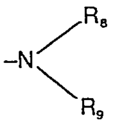 (9a) 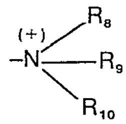 (9b)

in which $R_8$ is an alkyl group of from 1 to 4 C atoms which can have non-ionic substituents,

$R_9$ is an alkyl group of from 1 to 4 C atoms which can have non-ionic substituents, or is the phenyl radical, optionally containing 1 or 2 non-ionic substituents, and

$R_{10}$ is a hydrogen atom or an alkyl group of from 1 to 4 C atoms which can have non-ionic substituents, or in which

$R_8$ and $R_9$ – together with the nitrogen atom to which they are attached – form a 5-membered, 6-membered or 7-membered, heterocyclic moiety, or $R_8$ and $R_9$, or $R_8$, $R_9$ and $R_{10}$, – together with the positively charged nitrogen atom to which they are attached – form a 5-membered, 6-membered or 7-membered, heterocyclic moiety, it being possible for $R_{10}$ to be either part of the heterocyclic moiety of a hydrogen atom or the aforesaid alkyl group;

each of the benzene nuclei c and d can have 1 or 2 identical or different non-ionic substituents;

and n represents the number 1 or 2.

13. Process as claimed in any one of claims 1 to 3, characterized in that as the basic type dyestuff is used a naphthalactam dyestuff of the general formula (10) or (11)

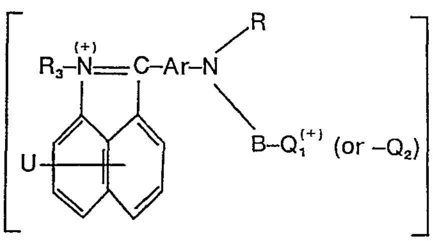 2 $X^{(-)}$ or $X^{(-)}$ (10)

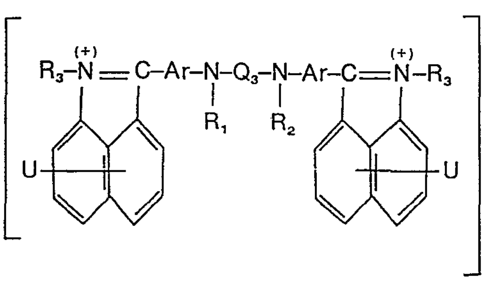 2 $X^{(-)}$ (11)

in which Ar, B, $Q_1^{(+)}$, $Q_2$, $Q_3$, R, $R_1$, $R_2$, $R_3$, U and $X^{(-)}$ have the meanings indicated in claims 5, 6, 8 and 9 and the substituents which each occur twice in formula (11) can be identical to or different from one another.

14. Process as claimed in any one of claims 1 to 4, characterized in that as the basic type dyestuff is used a compound of the general formula (12) or (13)

$$[(Q_2\text{– or) } Q_1^{(+)}\text{–B–}Y_1\text{–B–}Q_1^{(+)} \text{ (or –}Q_2)]m\ X^{(-)} \quad (12)$$

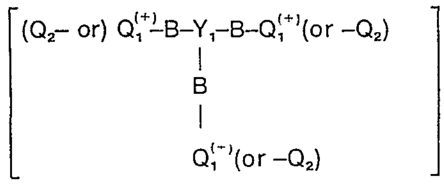 m $X^{(-)}$ (13)

in which B, $Q_1^{(+)}$, $Q_2$ and $X^{(-)}$ have the meanings indicated in claims 5 and 6 and the substituents which each occur several times in the formulae (12) and (13) can be identical to or different from one another;

$Y_1$ represents the radical of a dye chromophore, in particular a radical based on a copper phthalocyanine, anthraquinone or triphenylmethane compound;

and m represents 0, 1, 2 or 3.

15. Process as claimed in any one of claims 1 to 14, characterized in that mixtures of these basic type dyestuffs are used.

## Revendications

1. Procédé pour teindre une matière fibreuse, fraîchement préformée selon un procédé usuel du filage au mouillé, en des polymères ou copolymères, à modification acide, de l'acrylonitrile, selon lequel, après l'opération proprement dite de formation des fibres, on soumet la matière filée non teinte, à l'état gélifié et gonflé où elle se trouve ainsi qu'après une élimination dans une large mesure du solvant non aqueux de filage, avant ou bien pendant ou bien après l'étirage final, dans un milieu liquide, essentiellement aqueux, de teinture à l'action d'une solution aqueuse d'au moins un colorant pour lequel le processus de teinture s'effectue par une réaction acide/base entre le colorant et la fibre, avantageusement dans des conditions faiblement acides à des températures du bain de traitement comprises entre 10° et 100 °C et on l'y laisse pour fixer le colorant pendant un temps de séjour compris entre 1 seconde et 10 minutes, procédé caractérisé en ce qu'on utilise des colorants basiques qui présentent dans leur molécule plus d'un groupe se comportant comme un générateur de sel en présence des groupes acides de la substance fibreuse.

2. Procédé selon la revendication 1, caractérisé en ce qu'on utilise comme colorant basique un colorant dans lequel les groupes de la molécule du colorant se comportant comme des générateurs de sel sont constitués par plus d'un groupe ammonium quaternaire, plus d'un groupe dialkylhydrazonium ayant chacun 1 à 4 atomes de carbone dans les restes alkyles ou plus d'un groupe cycloammonium.

3. Procédé selon la revendication 1, caractérisé en ce qu'on utilise comme colorant basique un colorant dans la molécule duquel les groupes se comportant comme générateur de sel sont un groupe ammonium quaternaire, un groupe dialkylhydrazonium ayant à chaque fois 1 à 4 atomes

de carbone dans les restes alkyles ou un groupe cycloammonium et, en outre, il y a présence d'un ou plusieurs groupes amino primaires, secondaires ou tertiaires, guanidino, amidino ou hydrazino à liaison aliphatique.

4. Procédé selon la revendication 1, caractérisé en ce qu'on utilise comme colorant basique un colorant dans la molécule duquel les groupes se comportant comme générateurs de sels sont plus d'un groupe amino primaire, secondaire ou tertiaire, guanidino, amidino ou hydrazino à liaison aliphatique.

5. Procédé selon l'une des revendications 1 à 3, caractérisé en ce qu'on utilise comme colorant basique un colorant mono-azoïque de formule générale (1).

$[D^{(+)}-N=N-K]\ X^{(-)}$ ou $2\ X^{(-)}$, (1)
si K contient un groupe quaternaire,

dans laquelle:

$D^{(+)}$ représente le reste d'un composant diazotable carbocyclique ou hétérocyclique aromatique, qui possède l'un des groupes quaternaires cités dans la revendication 2, en particulier un groupe cyclammonium faisant partie d'un noyau hétérocyclique aromatique à cinq ou six chaînons, éventuellement avec un reste carbocyclique aromatique directement fixé dessus ou condensé, ces noyaux pouvant porter des substituants dans les parties hétérocycliques et/ou carbocycliques; ou bien un groupe ammonium ou hydrazonium substitué fixé directement, ou par l'intermédiaire d'un chaînon de pontage, sur un reste D carbocyclique ou hétérocyclique aromatique éventuellement substitué;

K représente le reste d'un copulant carbocyclique ou hétérocyclique aromatique, choisi en particulier dans la série benzénique, naphtalénique ou de l'indole, comportant au moins un groupe amino primaire, secondaire ou tertiaire à liaison aliphatique, basique sans charge, fixé directement ou par l'intermédiaire d'un chaînon de pontage à un noyau aromatique de K, ou bien un groupe ammonium quaternaire, faisant éventuellement partie d'un noyau hétérocyclique aromatique à cinq ou six chaînons, d'une amidine, d'une guanidine, d'une hydrazine ou d'un reste thiuronium, ces noyaux aromatiques de K pouvant porter les substituants dans les parties hétérocycliques et/ou carbocycliques; et

$X^{(-)}$ représente l'équivalent d'un anion d'un acide minéral ou organique fort ou d'un sel double.

6. Procédé selon l'une des revendications 1 à 3, caractérisé en ce qu'on utilise comme colorant basique un colorant monoazoïque de formule générale (2a):

$$\left[D^{(+)}-N=N-Ar-\underset{\underset{R}{|}}{N}-B-Q_1^{(+)}\quad(\text{ou }-Q_2)\right]\ 2\ X^{(-)}\ \text{ou}\ X^{(-)}\qquad(2a)$$

ou de formule générale (2b):

$$\left[D^{(+)}-N=N-Ar-O-B-Q_1^{(+)}\quad(\text{ou }-Q_2)\right]\ 2\ X^{(-)}\ \text{ou}\ X^{(-)}\qquad(2b)$$

ou de formule générale (2c):

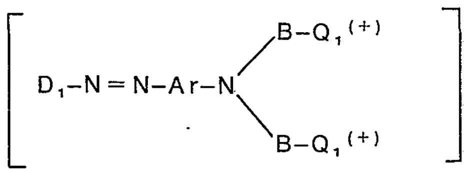
2 $X^{(-)}$ (2c)

dans lesquelles $D^{(+)}$ et $X^{(-)}$ ont les sens indiqués à la revendication 5;

$D_1$ représente le reste d'un composant diazotable carbocyclique ou hétérocyclique aromatique, choisi en particulier dans la série benzénique ou naphtalénique, et qui peut contenir des substituants basiques et/ou de préférence non ionogènes;

Ar représente un reste p-phénylène ou naphtylène-1,4, qui peut être substitué de préférence par un ou deux substituants non ionogènes;

R représente un atome d'hydrogène ou un reste alkyle ayant 1 à 4 atomes de carbone, éventuellement substitué, un reste aralkyle ou cycloalkyle;

B représente un chaînon aliphatique divalent de pontage, en particulier un reste alkylène ayant 1 à 6 atomes de carbone, ou un reste alcénylène inférieur;

$Q_1^{(+)}$ représente un groupe ammonium quaternaire, un groupe hydrazonium ou un groupe cyclammonium faisant partie d'un noyau hétérocyclique aromatique à cinq ou six chaînons; et

$Q_2$ représente un groupe amino primaire, secondaire ou tertiaire basique, non chargé, pouvant faire partie d'un noyau hétérocyclique aromatique à cinq ou six chaînons, ou bien $Q_2$ représente un groupe amidino, guanidino ou hydrazino.

7. Procédé selon l'une des revendications 1 à 3, caractérisé en ce qu'on utilise comme colorant basique un colorant disazoïque de formule générale (3a).

$$\left[Q_1^{(+)}-B-\underset{\underset{R}{|}}{N}-Ar-N=N-A_1-N=N-Ar-\underset{\underset{R}{|}}{N}-B-Q_1^{(+)}\quad(\text{ou }-Q_2)\right]\ 2\ X^{(-)}\ \text{ou}\ X^{(-)}\qquad(3a)$$

ou de formule générale (3b):

$$\left[(Q_2-\text{ ou })\ Q_1^{(+)}-B-\underset{\underset{R}{|}}{N}-Ar-N=N-A_2^{(+)}-N=N-Ar-\underset{\underset{R}{|}}{N}-B-Q_1^{(+)}(\text{ou }-Q_2)\right]\ 3\ X^{(-)}\ \text{ou}\ 2\ X^{(-)}\ \text{ou}\ X^{(-)}\qquad(3b)$$

dans lesquelles Ar, B, R, $Q_1^{(+)}$, $Q_2$ et $X^{(-)}$ ont les sens indiqués aux revendications 5 et 6, les restes apparaissant deux fois dans les formules (3a) et (3b) pouvant à chaque fois être identiques ou différer les uns des autres;

$A_1$ représente le reste d'un composant tétrazotable carbocyclique ou hétérocyclique aromatique;

$A_2^{(+)}$ représente le reste d'un composant tétrazotalbe carbocyclique ou hétérocyclique aromatique comportant au moins un groupement quaternaire tel qu'indiqué à la revendication 2, et faisant en particulier partie d'un noyau hétérocyclique aromatique à cinq ou six chaînons;

et des restes $Q_1^{(+)}$ ainsi que $Q_2$ – tous deux ensemble ou chacun séparément – pouvant aussi être reliés, directement ou tout simplement par l'intermédiaire d'un chaînon B de pontage, au reste arylène Ar correspondant à chaque fois, mais avec la règle de choix selon laquelle un reste $Q_2$ éventuellement présent dans la formule (3a) ne peut être directement relié à Ar et que, selon la formule (3b), si deux restes $Q_2$ sont reliés des deux côtés directement à Ar, le reste du composant tétrazotable $A_2^{(+)}$ doit présenter plus d'un groupement quaternaire tel que défini à la revendication 2.

8. Procédé selon la revendication 1 ou 2, caractérisé en ce qu'on utilise comme colorant basique un colorant disazoïque de formule générale (4a):

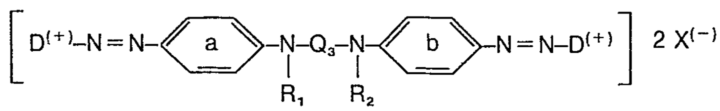
(4a)

ou de formule générale (4b):

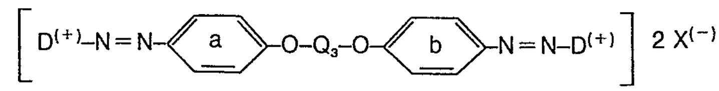
(4b)

dans lesquelles les symboles $D^{(+)}$ sont identiques ou différents et chaque $D^{(+)}$ ainsi que $X^{(-)}$ possède les sens indiqués à la revendication 5;

$Q_3$ représente un reste alkylène ayant jusqu'à 8 atomes de carbone, et qui peut éventuellement être interrompu par –O–, –NH– ou un reste carbocyclique aromatique;

$R_1$ et $R_2$ sont identiques ou différents et représentent chacun un atome d'hydrogène ou un groupe alkyle ayant 1 à 4 atomes de carbone, éventuellement substitué, ou bien $R_1$ et $R_2$ pris avec les deux atomes d'azote et avec le reste $Q_3$ forment un noyau hétérocyclique;

et les noyaux benzéniques a et b peuvent être substitués, de façon identique ou différente, par un ou deux substituants non ionogènes ou bien les noyaux benzéniques a ou b ou les deux noyaux, a et b, forment, à chaque fois avec un noyau benzénique condensé, un reste naphtyle.

9. Procédé selon l'une des revendications 1 ou 2, caractérisé en ce qu'on utilise comme colorant basique un colorant méthinique de formule générale (5):

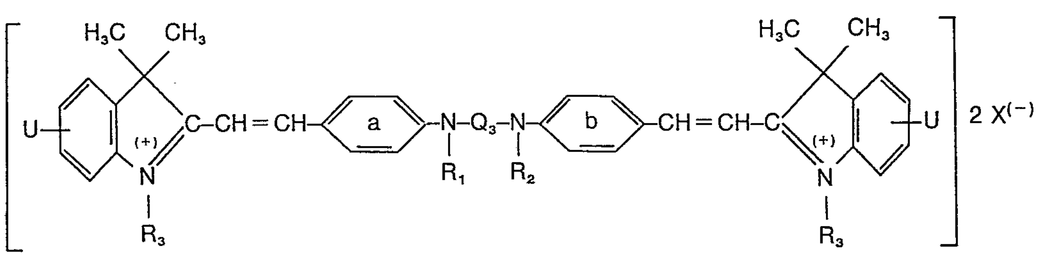
(5)

dans laquelle $Q_3$, $R_1$, $R_2$, a et b ainsi que $X^{(-)}$ ont les sens indiqués aux revendications 5 et 8;

$R_3$ représente un reste alkyle ayant 1 à 4 atomes de carbone, éventuellement substitué, ou un reste aralkyle; et

les deux U sont identiques ou différents et représentent chacun un atome d'hydrogène ou un substituant non ionogène.

10. Procédé selon l'une des revendications 1 et 2, caractérisé en ce qu'on utilise comme colorant basique un colorant azaméthinique de formule générale (6):

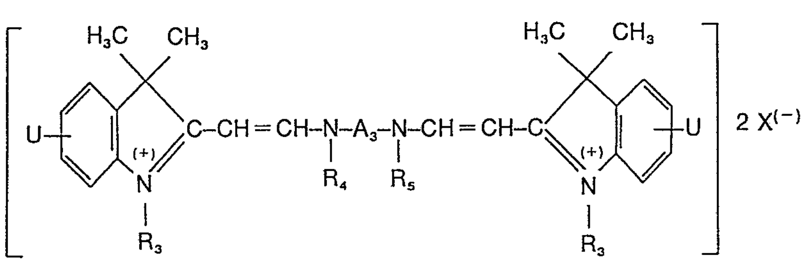
(6)

ou un colorant diazaméthinique de formule générale (7):

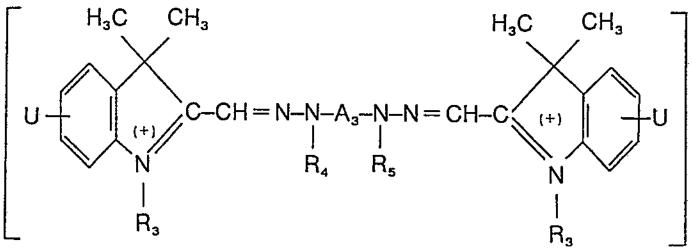
2 $X^{(-)}$ (7)

dans lesquelles $R_3$, U et $X^{(-)}$ ont les sens indiqués aux revendications 5 et 9;

$A_3$ représente le reste bivalent d'un ou plusieurs noyaux carbocycliques ou hétérocycliques aromatiques, pouvant encore être reliés les uns aux autres par des chaînons non aromatiques de pontage; et

$R_4$ et $R_5$ sont identiques ou différents et représentent chacun un atome d'hydrogène ou un reste alkyle ayant 1 à 4 atomes de carbone et qui est éventuellement substitué.

11. Procédé selon l'une des revendications 1 à 3, caractérisé en ce qu'on utilise comme colorant basique un colorant méthinique de formule générale (8):

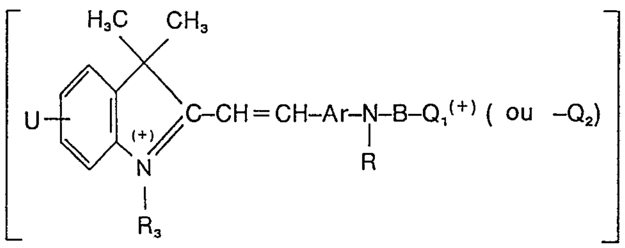
2 $X^{(-)}$ ou $X^{(-)}$ (8)

dans laquelle Ar, B, R, $R_3$, $Q_1^{(+)}$, $Q_2$, U et $X^{(-)}$ ont les sens indiqués aux revendications 5, 6 et 9.

12. Procédé selon l'une des revendications 1 à 3, caractérisé en ce qu'on utilise comme colorant basique un colorant azaméthinique ou diazaméthinique de formule générale (9):

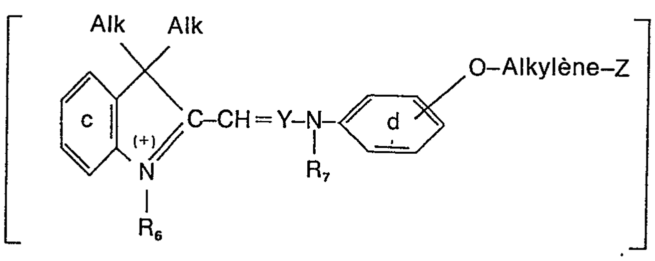
n $X^{(-)}$ (9)

dans laquelle $X^{(-)}$ a le sens indiqué à la revendication 5;

$R_6$ représente un groupe alkyle ayant 1 à 4 atomes de carbone, qui peut porter des substituants non ionogènes;

Alk représente à chaque fois un groupe alkyle ayant 1 à 4 atomes de carbone, les deux groupes Alk pouvant être identiques ou différer l'un de l'autre;

Y représente le reste méthine (CH) ou un atome d'azote;

$R_7$ représente un atome d'hydrogène ou un groupe alkyle ayant 1 à 4 atomes de carbone, pouvant porter des substituants non ionogènes;

Alkylène représente un groupe alkylène, linéaire ou ramifié, ayant 2 à 6 atomes de carbone;

Z représente un groupe de formule (9a) ou (9b):

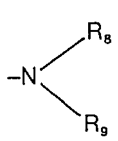
(9a)

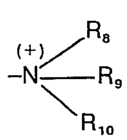
(9b)

dans lesquelles:

$R_8$ est un groupe alkyle ayant 1 à 4 atomes de carbone, pouvant porter les substituants non ionogènes;

$R_9$ est un groupe alkyle ayant 1 à 4 atomes de carbone, pouvant porter les substituants non ionogènes, ou représente le reste phényle, portant éventuellement un ou deux substituants non ionogènes,

$R_{10}$ représente un atome d'hydrogène ou un groupe alkyle ayant 1 à 4 atomes de carbone et pouvant porter des substituants non ionogènes, ou bien

$R_8$ et $R_9$ forment avec l'atome d'azote un reste hétérocyclique à cinq, six ou sept chaînons, ou

$R_8$ et $R_9$ ou bien $R_8$, $R_9$ et $R_{10}$ pris avec l'atome d'azote à charge positive forment un reste hétérocyclique à cinq, six ou sept chaînons, $R_{10}$ pouvant faire partie du reste hétérocyclique ou pouvant être un atome d'hydrogène ou le groupe alkyle précité;

les noyaux benzéniques c et d peuvent être

substitués, de façon identique ou différente, par un ou deux substituants non ionogènes; et

n représente le nombre 1 ou 2.

13. Procédé selon l'une des revendications 1 à 3, caractérisé en ce qu'on utilise comme colorant basique un colorant de naphtalactame de formule générale (10) ou (11):

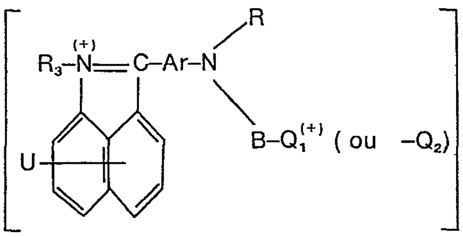

$2\,X^{(-)}$ ou $X^{(-)}$

(10)

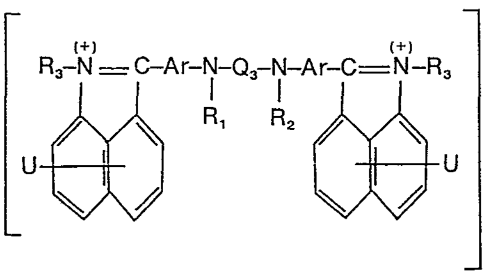

$2\,X^{(-)}$

(11)

dans lesquelles Ar, B, $Q_1^{(+)}$, $Q_2$, $Q_3$, R, $R_1$, $R_2$, $R_3$, U et $X^{(-)}$ ont les sens indiqués dans les revendications 5, 6, 8 et 9, et, dans la formule (11), des substituants apparaissant deux fois peuvent être identiques ou différer l'un de l'autre.

14. Procédé selon l'une des revendications 1 à 4, caractérisé en ce qu'on utilise comme colorant basique un composé répondant à la formule générale (12) ou (13):

$$[(Q_2\text{– ou})\ Q_1^{(+)}\text{–B–}Y_1\text{–B–}Q_1^{(+)}\ (\text{ou }–Q_2)]m\ X^{(-)} \qquad (12)$$

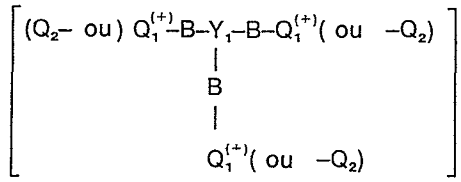

$m\ X^{(-)}$

(13)

dans lesquelles B, $Q_1^{(+)}$, $Q_2$ et $X^{(-)}$ ont les sens indiqués aux revendications 5 et 6, et les substituants apparaissant plusieurs fois dans les formules (12) et (13) peuvent être identiques ou différer les uns des autres;

$Y_1$ représente le reste d'un chromophore de colorant, en particulier à base d'une phtalocyanine de cuivre, d'un composé anthraquinonique ou du triphénylméthane, et

m vaut 0, 1, 2 ou 3.

15. Procédé selon l'une des revendications 1 à 14, caractérisé en ce qu'on utilise des mélanges de ces colorants basiques.